# EUROPEAN PATENT APPLICATION

(11) **EP 4 287 461 A1**
(43) Date of publication of application: **06.12.2023**
(21) Application number: 21922108.2
(22) Date of filing: 14.05.2021
(51) Int. Cl.: H02K 1/20, H02K 1/18, H02K 9/00

(54) **GENERATOR STATOR OF BAFFLE AND AIR-COOLED TYPE, AND GENERATOR WITH HIGH TORQUE DENSITY**

(30) Priority: 28.01.2021 CN 202110119241
(71) Applicant: Zhejiang University, Hangzhou, Zhejiang 310058 (CN); Shanghai Electric Wind Power Group Co., Ltd., Shanghai 200241 (CN)
(72) Inventor: WEN, Hui, Shanghai 200241 (CN); WU, Lijian, Shanghai 200241 (CN); SHI, Yang, Shanghai 200241 (CN); DU, Yidong, Shanghai 200241 (CN); WANG, Wenting, Shanghai 200241 (CN); LI, Huayang, Shanghai 200241 (CN)
(74) Representative: Dai, Simin
(86) International application number: PCT/CN2021/093796
(87) International publication number: WO 2022/160510

(57) **Abstract**

The present disclosure provides a stator of a zigzag-type-flow air-cooled generator and a generator with a high torque density. The generator stator includes a stator core and stator windings. The stator core has a cylindrical hollow structure, where the stator core includes a cavity in a hollow region and a plurality of stator teeth on a side of the stator core facing a generator rotor, the plurality of the stator teeth extend radially along the stator core and are arranged at intervals along a circumferential direction of the stator core, a gap between adjacent two stator teeth forms a stator slot such that a plurality of the stator slots are formed, and the stator core includes a cooling airduct. The stator windings are in the stator slots, where the stator winding and at least one stator tooth adjacent to the stator winding form a ventilation gap in tooth width direction, the ventilation gap extends along extension direction of the stator tooth, and cooling airduct connects the ventilation gap and the cavity in the hollow region of the stator core. The technical solution achieves comprehensive optimization for the electromagnetic performance and cooling effect of the generator, effectively improving the upper limit of the torque density of the generator.

## Description

### TECHNICAL FIELD

The present disclosure relates to the field of generator technology, in particular to a generator stator and a generator.

### BACKGROUND

A copper loss, an iron loss, a permanent magnet eddy current loss, and a mechanical loss generated during an operation of an electrical machine cause the temperature of each component of the electrical machine to rise. High temperatures not only cause a decrease in performance of the electrical machine, but also cause reliability issues. For example, an increase in wire resistance caused by high temperature and a decrease in residual magnetism of a permanent magnet can significantly reduce the power and efficiency of permanent magnet electrical machine. High temperature can further cause a significant decrease in insulation life and irreversible demagnetization of a permanent magnet. Therefore, it is necessary to optimize the design of the electrical machine to provide a reliable cooling method to effectively control temperature rise of the electrical machine.

At present, the most commonly used methods are liquid cooling and air cooling. The cooling effect of liquid cooling is good, and usually, the heat transfer coefficient of liquid cooling is 1-2 orders of magnitude higher than the heat transfer coefficient of air cooling. However, liquid cooling has a series of reliability and maintainability problems related to leakage, insulation, and water quality treatment, which restricts the application and promotion of liquid cooling. For application scenarios with high reliability requirements and high maintenance difficulty, such as offshore wind power, aerospace, etc., air cooling is still the most commonly used cooling technology. However, these application scenarios often have extremely high requirements for space and weight, so it is desired that air cooling can achieve better cooling effects, thereby, under reliability constraints, the torque density and the power density of the electrical machine need to be further improved. In addition, the enhancement of the air-cooling effect also means that the alternating frequency and peak-to-valley value of the temperature field of the electrical machine will be weakened to a certain extent in non-stationary load situations or working conditions, which can improve the stability and controllability of the operation of the electrical machine.

For electrical machine in other application fields, air cooling also holds a place. For example, large steam turbine generators usually use liquid internal cooling, but many small and medium-sized steam turbine generators also use air cooling because of low supporting costs, low maintenance costs, and good safety performance of the air cooling.

In summary, although the cooling efficiency of air cooling is not as high as the cooling efficiency of liquid cooling, the strong reliability, low costs, and easy maintenance of air cooling determine that air cooling technology will still be widely used in the future development of electrical machine. If the cooling effect of air cooling can be improved to a certain extent, it is of great significance for promoting the development of the electrical machine industry and even the entire industry.

### SUMMARY

The present disclosure provides a generator stator and a generator, which can achieve effective heat dissipation of the generator.

The first aspect of the present disclosure provides a generator stator, including: a stator core with a cylindrical hollow structure, where the stator core includes a cavity in a hollow region and a plurality of stator teeth on a side of the stator core facing a generator rotor, the plurality of the stator teeth extend radially along the stator core and are arranged at intervals along a circumferential direction of the stator core, a gap between adjacent two stator teeth forms a stator slot such that a plurality of the stator slots are formed, and the stator core includes a cooling airduct; and a plurality of stator windings in the stator slots , where a ventilation gap is formed between the stator winding and at least one stator tooth adjacent to the stator winding in a tooth width direction, the ventilation gap extends along an extension direction of the stator tooth, and the cooling airduct connects the ventilation gap and the cavity in the hollow region of the stator core, where the ventilation gap is configured to connect an airgap between the generator stator and the generator rotor.

The second aspect of the present disclosure provides a generator, including: a generator stator as described in the above; and a generator rotor, where the generator rotor is coaxial with the generator stator and is configured to rotate relative to the generator stator, where an airgap is between the generator rotor and the generator stator, and the ventilation gap connects the airgap and the cooling airduct.

The technical solutions provided in the present disclosure can at least achieve the following beneficial effects. The present disclosure provides a generator stator and a generator, where a stator core includes a cooling airduct, a ventilation gap is formed between a stator winding and at least one stator tooth adjacent to the stator winding in a tooth width direction, the cooling airduct is connected to the ventilation gap and a cavity at a hollow region of the stator core, and the ventilation gap is connected to an airgap. The ventilation gap is enclosed jointly by the stator winding and the stator tooth, which can make the stator winding more fully and directly contact with a cooling medium, resulting in better heat exchange effect. On the other hand, the setting of the ventilation gap and the cooling airduct can at least partially avoid the effective electromagnetic length loss caused by the traditional radially extended airduct, effectively suppress the magnetic field distortion on the stator core, and weaken parasitic negative effects such as eddy current loss, which achieves comprehensive optimization of the electromagnetic performance and cooling effect of the generator, and effectively improves the upper limit of the torque density of the generator.

### BRIEF DESCRIPTION OF DRAWINGS

FIG. 1 is a semi-sectional view of a generator according to an embodiment of the present disclosure.
FIG. 2 is an axial view of a stator core shown in FIG. 1.
FIG. 3 is a schematic diagram of one of lamination stacks of a stator core.
FIG. 4 is a schematic diagram of a partial structure of the lamination stack shown in FIG. 3.
FIG. 5 is a schematic diagram of a first laminated plate of the lamination stack shown in FIG. 3.
FIG. 6 is a schematic diagram of a second laminated plate of the lamination stack shown in FIG. 3.
FIGs. 7 to 9 are schematic diagrams of a ventilation gap between a stator winding and a tooth of a laminated plate.
FIG. 10 is a schematic diagram of a lamination stack according to an embodiment of the present disclosure.
FIG. 11 is a schematic diagram of a lamination stack according to an embodiment of the present disclosure.
FIG. 12 is a schematic diagram of an axial airduct formed by stacking a first laminated plate and a second laminated plate.
FIG. 13 is a schematic diagram of a lamination stack according to an embodiment of the present disclosure.
FIG. 14 is a schematic diagram of a first laminated plate of the lamination stack shown in FIG. 13.
FIG. 15 is a schematic diagram of a second laminated plate of the lamination stack shown in FIG. 13.
FIG. 16 is a schematic diagram of a partial structure of the lamination stack shown in FIG. 13.
FIG. 17 is a schematic diagram of a lamination stack according to an embodiment of the present disclosure.
FIG. 18 is a schematic diagram of a lamination stack according to an embodiment of the present disclosure.
FIG. 19 is a schematic diagram of a first laminated plate of the lamination stack shown in FIG. 18.
FIG. 20 is a schematic diagram of a lamination stack according to an embodiment of the present disclosure.
FIG. 21 is a schematic diagram of a first laminated plate of the lamination stack shown in FIG. 20.
FIG. 22 is a schematic diagram of a lamination stack according to an embodiment of the present disclosure.
FIG. 23 is a schematic diagram of a first laminated plate of the lamination stack shown in FIG. 22.
FIG. 24 is a schematic diagram of a lamination stack according to an embodiment of the present disclosure.
FIG. 25 is a schematic diagram of a first laminated plate of the lamination stack shown in FIG. 24.
FIG. 26 is a schematic diagram of a lamination stack according to an embodiment of the present disclosure.
FIG. 27 is a schematic diagram of a first laminated plate of the lamination stack shown in FIG. 26.
FIG. 28 is a schematic diagram of a second laminated plate of the lamination stack shown in FIG. 26.
FIG. 29 is a schematic diagram of a first laminated plate and a second laminated plate of a lamination stack that are stacked according to an embodiment of the present disclosure.
FIG. 30 is a schematic diagram of a lamination stack according to an embodiment of the present disclosure.
FIG. 31 is a schematic diagram of a first surface of a laminated plate of the lamination stack shown in FIG. 30.
FIG. 32 is a schematic diagram of a second surface of a laminated plate of the lamination stack shown in FIG. 30.
FIG. 33 is a schematic diagram of a lamination stack according to an embodiment of the present disclosure.
FIG. 34 is a schematic diagram of a first surface of a laminated plate of the lamination stack shown in FIG. 33.
FIG. 35 is a schematic diagram of a second surface of a laminated plate of the lamination stack shown in FIG. 33.
FIG. 36 is a schematic diagram of a lamination stack according to an embodiment of the present disclosure.
FIG. 37 is a schematic diagram of one laminated plate of the lamination stack shown in FIG. 36.
FIG. 38 is a schematic diagram of a lamination stack according to an embodiment of the present disclosure.
FIG. 39 is a schematic diagram of one laminated plate of the lamination stack shown in FIG. 38.
FIG. 40 is a semi-sectional view of generator 1.
FIG. 41 is a schematic diagram of a part of a lamination stack in a stator core.
FIG. 42 is a semi-sectional view of generator 1.
FIG. 43 is a semi-sectional view of generator 1.
FIG. 44 is a schematic diagram of a lamination stack according to an embodiment of the present disclosure.
FIG. 45 is a schematic diagram of a first laminated plate of the lamination stack shown in FIG. 44.
FIG. 46 is a schematic diagram of a second laminated plate of the lamination stack shown in FIG. 44.
FIG. 47 is a schematic diagram of a third laminated plate of the lamination stack shown in FIG. 44.
FIG. 48 is a schematic diagram of a third laminated plate of the lamination stack shown in FIG. 44 according to an embodiment of the present disclosure.
FIG. 49 is a schematic diagram of a flow direction of cooling medium A from an airgap to a cavity according to an embodiment of the present disclosure.
FIG. 50 is a schematic diagram of a flow direction of cooling medium A from an airgap to a cavity according to an embodiment of the present disclosure.
FIG. 51 is a schematic diagram of a partial structure of a stator core according to an embodiment of the present disclosure.
FIG. 52 is a schematic diagram of a first laminated plate shown in FIG. 51.
FIG. 53 is a schematic diagram of a second laminated plate shown in FIG. 51.
FIG. 54 is a schematic diagram of a lamination stack according to an embodiment of the present disclosure.
FIG. 55 is a schematic diagram of a lamination stack according to an embodiment of the present disclosure.
FIG. 56 is a schematic diagram of a first laminated plate of the lamination stack shown in FIG. 55.
FIG. 57 is a schematic diagram of a second laminated plate of the lamination stack shown in FIG. 55.
FIG. 58 is a schematic diagram of a partial structure of a stator core according to an embodiment of the present disclosure.
FIG. 59 is a schematic diagram of a partial structure of a stator core according to an embodiment of the present disclosure.
FIG. 60 is a schematic diagram of a lamination stack according to an embodiment of the present disclosure.
FIG. 61 is a schematic diagram of a first laminated plate of the lamination stack shown in FIG. 60.
FIG. 62 is a schematic diagram of a second laminated plate of the lamination stack shown in FIG. 60.
FIG. 63 is a schematic diagram of a first laminated plate of the lamination stack shown in FIG. 60.
FIG. 64 is a schematic diagram of a second laminated plate of the lamination stack shown in FIG. 60.

### DETAILED DESCRIPTION

Embodiments will be described in detail herein, examples of which are illustrated in the accompanying drawings. Where the following description refers to the drawings, elements with the same numerals in different drawings refer to the same or similar elements unless otherwise indicated. Embodiments described in the illustrative examples below are not intended to represent all embodiments consistent with the present disclosure. Rather, they are merely embodiments of devices and methods consistent with some aspects of the present disclosure.

Terms used in the present disclosure is only for the purpose of describing particular embodiments and is not intended to limit the present disclosure. Unless otherwise defined, the technical terms or scientific terms used in the present disclosure shall have the ordinary meanings understood by those skilled in the art to which the present disclosure belongs. "First", "second" and similar words used in the present disclosure do not indicate any sequence, quantity or importance, but are only used to distinguish different components. Similarly, words such as "one" or "a" do not indicate a quantitative limitation, but indicate that there is at least one, and if only "one" is indicated, it will be specifically stated. "Multiple", "a plurality of" or "several" means two or more. Unless otherwise indicated, terms such as "front", "rear", "lower", "upper", "top" and/or "bottom" are only used for convenience of description and are not intended to limit to a position or an orientation in space. "includes", "comprises" and similar terms mean that the elements or items listed before "includes " or "comprises" include the elements or items listed after "includes " or "comprises" and their equivalents, and do not exclude other elements or objects. Words such as "connect" or "couple" are not limited to physical or mechanical connections, and may include electrical connections, whether direct or indirect.

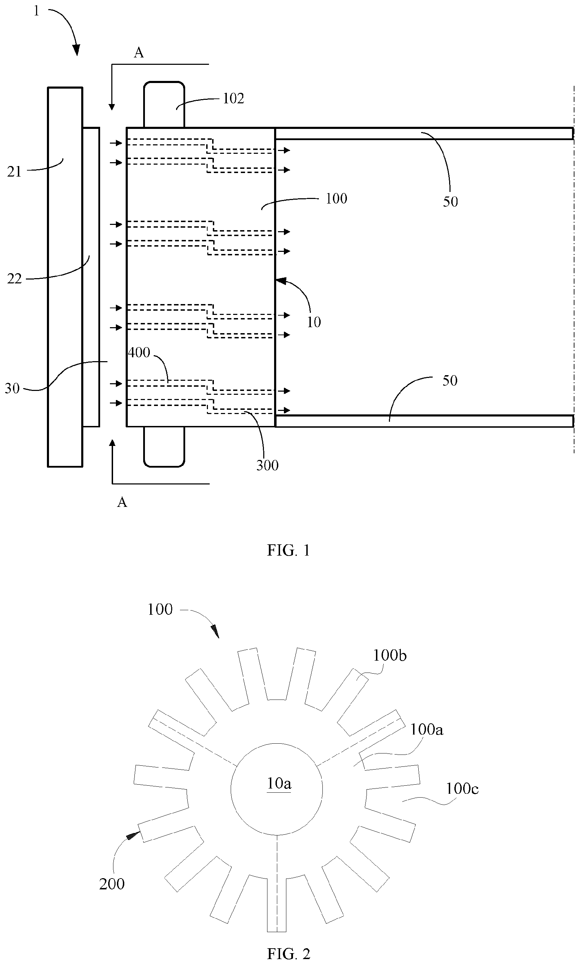

Refer to FIG. 1, which is a semi-sectional view of a partial structure of generator 1 according to an embodiment of the present disclosure.

The embodiment of the present disclosure provides a generator 1, which includes a generator stator 10 and a generator rotor 20. The generator rotor 20 is coaxial with the generator stator 10, and the generator rotor 20 can rotate relative to the generator stator 10, such that the generator stator 10 generates current to achieve that the generator 1 generates electricity. The generator rotor 20 includes a rotor core 21 and a permanent magnet 22. The permanent magnet 22 is located on a side of the rotor core 21 that faces the generator stator 10, and an airgap 30 is reserved between the permanent magnet 22 and the generator stator 10. The airgap 30 is an important part for achieving conversion between mechanical energy and electrical energy, and can also provide a cooling medium A, such as air, to enter the interior of the generator 1, to cool the generator stator 10 and the generator rotor 20. In an embodiment, the cooling medium A enters the airgap 30 from both axial ends of the generator 1, passes through the generator stator 10, enters a cavity 10a inside the generator stator 10, and is discharged from two end plates 50 arranged in an axial direction of the generator 1, thereby performing circulating cooling for an internal part of the generator 1. A flow path of the cooling medium A can further be provided with a driving device and a heat exchange device, such as an air-water heat exchanger with a fan, to drive the circulating flow of the cooling medium A and dissipate the heat absorbed by the cooling medium A. It should be noted that the flow direction of the cooling medium A is not limited to this.

In the embodiment shown in FIG. 1, the generator stator 10 is set as an internal stator, and the generator stator 10 is located on an inner side of the generator rotor 20. In other embodiments, the generator stator 10 can be set as an external stator, and the generator stator 10 surrounds an outer side of the generator rotor 20.

Combine FIG. 1 and FIG. 2. FIG. 2 is an axial view of a stator core shown in FIG. 1.

The generator stator 10 includes a stator core 100 and multiple stator windings 102. The stator core 100 has a cylindrical hollow structure, including a cavity 10a located in the hollow region. The stator core 100 includes a yoke 100a and multiple stator teeth 100b. The yoke 100a is arranged in a hollow cylindrical shape, and the hollow region is the cavity 10a. Multiple stator teeth 100b are formed on a side of the yoke 100a facing the generator rotor 20 and adjacent to the airgap 30. The multiple stator teeth 100b extend radially along the stator core 100 and are arranged along a circumferential direction of the stator core 100. A gap between adjacent stator teeth 100b forms a stator slot 100c, such that there is a plurality of the stator slots 100c. In an embodiment, multiple stator windings 102 are assembled within the stator slots 100c, and are respectively mounted on outer side of the stator teeth 100b.

As shown in FIG. 2, the stator core 100 includes multiple lamination stacks 200, and the number of lamination stacks 200 is not limited. The multiple lamination stacks 200 are arranged in a cylindrical hollow structure, and stator teeth 100b and stator slots 100c are provided on a side of the multiple lamination stacks 200 facing the generator rotor 20. It should be pointed out that the structure of the stator core 100 in FIG. 2 is only for illustration, and the actual number of stator teeth 100b in the generator 1 is much more than the number of stator teeth 100b shown in FIG. 2. For example, the common number of teeth in direct-drive permanent magnet wind turbines is 200-400, and the stator core 100 and lamination stacks 200 can be divided into blocks along the circumferential direction.

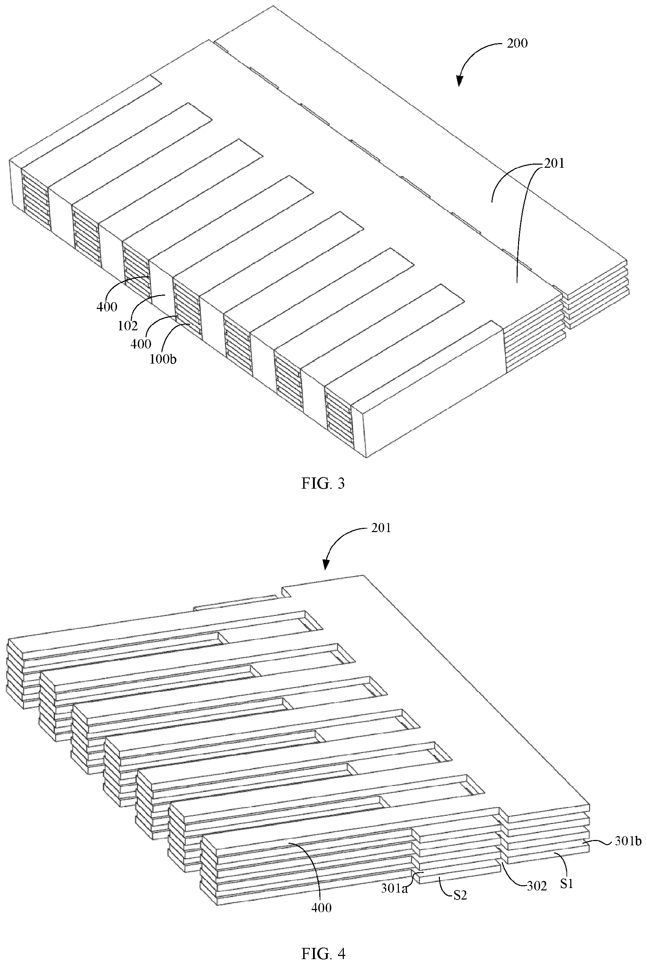

Refer to FIG. 3, which is a schematic diagram of one of lamination stacks 200 of a stator core 100.

The lamination stack 200 includes multiple laminated plates 201 that are stacked along a thickness direction. A stacking direction of the multiple laminated plates 201 is parallel to the axial direction of the stator core 100. It should be pointed out that for a rotating electrical machine, both the lamination stack 200 and the laminated plate 201 are in an arc-shaped structure. In the present disclosure, for the sake of simplicity in drawing, both the lamination stack 200 and the laminated plate 201 are drawn in a linear structure.

The lamination stack 200 is provided with a ventilation gap 400. A ventilation gap 400 is formed between the stator winding 102 and at least one stator tooth 100b that is adjacent to the stator winding 102 in the tooth width direction, and the ventilation gap 400 extends along an extension direction of the stator tooth 100b. The stator core 100 includes a cooling airduct 300 (see FIG. 1), where the cooling airduct 300 is connected to the ventilation gap 400 and the cavity 10a at the hollow region of the stator core 100, and the ventilation gap 400 is connected to the airgap 30, so that the cooling medium A can flow between the airgap 30 and the cavity 10a. In an embodiment, after the cooling medium A enters the airgap 30, the cooling medium A can further flow along the ventilation gap 400 and the cooling airduct 300 to the cavity 10a at the hollow region of the stator core 100. During the flow process of the cooling medium A, the cooling medium A exchanges heat with the stator teeth 100b and the stator windings 102 to achieve cooling of the stator core 100. For example, the stator tooth 100b and the stator winding 102 are enclosed to form the ventilation gap 400, which can make the stator winding 102 more fully and directly contact the cooling medium A, resulting in better heat exchange effect. On the other hand, the setting of the ventilation gap 400 and the cooling airduct 300 can at least partially avoid the effective electromagnetic length loss caused by the traditional radially extended airduct, effectively suppress the magnetic field distortion on the stator core, and weaken parasitic negative effects such as eddy current loss, which achieves comprehensive optimization of the electromagnetic performance and cooling effect of the generator, and effectively improves the upper limit of the torque density of the generator 1.

In an embodiment, multiple ventilation gaps 400 are formed between the stator winding 102 and at least one stator tooth 100b that is adjacent to the stator winding 102 in the tooth width direction, and at least some of the multiple ventilation gaps 400 are arranged along an axial direction of the stator core 100, which makes the distribution of the ventilation gaps 400 more dispersed in the axial direction of the stator core 100, so that multiple parts of the stator winding 102 can directly contact the cooling medium A, which increases the heat exchange area of the stator winding 102, and further enhances the cooling effect.

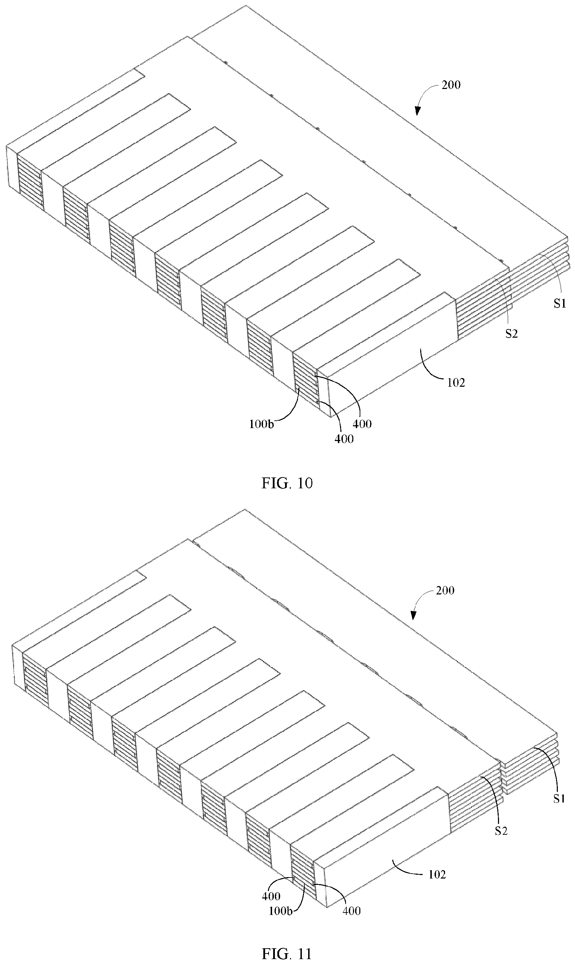

In some embodiments, multiple ventilation gaps 400 are formed between the stator winding 102 and one of the stator teeth 100b adjacent to the stator winding 102 in the tooth width direction, and the multiple ventilation gaps 400 can be located on the same side of the stator winding 102 (refer to FIG. 10), and arranged along the axial direction of the stator core 100. In some embodiments, there are multiple ventilation gaps 400 between the stator winding 102 and multiple stator teeth 100b adjacent to the stator winding 102 in the tooth width direction, and the multiple ventilation gaps 400 are located on both sides of the stator winding 102 (refer to FIG. 3). The ventilation gaps 400 on each side are arranged along the axial direction of the stator core 100. In different application scenarios, the ventilation gaps 400 can be set in different manners.

Refer to FIGs. 4 to 6, where FIG. 4 is a schematic diagram of a partial structure of the lamination stack 200 shown in FIG. 3, and FIGs. 5 and 6 are schematic diagrams of a first laminated plate S1 and a second laminated plate S2 of the lamination stack 200 shown in FIG. 3.

The laminated plate 201 includes a yoke part 201a and a tooth part 201b connected to the yoke part 201a. The tooth part 201b is formed on a side of the yoke part 201a facing the generator rotor 20, and the tooth part 201b extends along a radial direction of the stator core 100. The tooth parts 201b of multiple laminated plates 201 are stacked to form the stator tooth 100b, and the yoke parts 201a of multiple laminated plates 201 are stacked to form the yoke 100a.

The laminated plate 201 can include multiple tooth parts 201b, where the multiple tooth parts 201b are arranged along the circumferential direction of the stator core 100. A gap between adjacent tooth parts 201b forms a slot part 201c, and slot parts 201c of multiple laminated plates 201 are stacked to form the stator slot 100c. The laminated plate 201 can be provided with multiple slot parts 201c, where the multiple slots are arranged along the circumferential direction of the stator core 100. slot parts 201c of multiple laminated plates 201 are stacked to form multiple stator slots 100c.

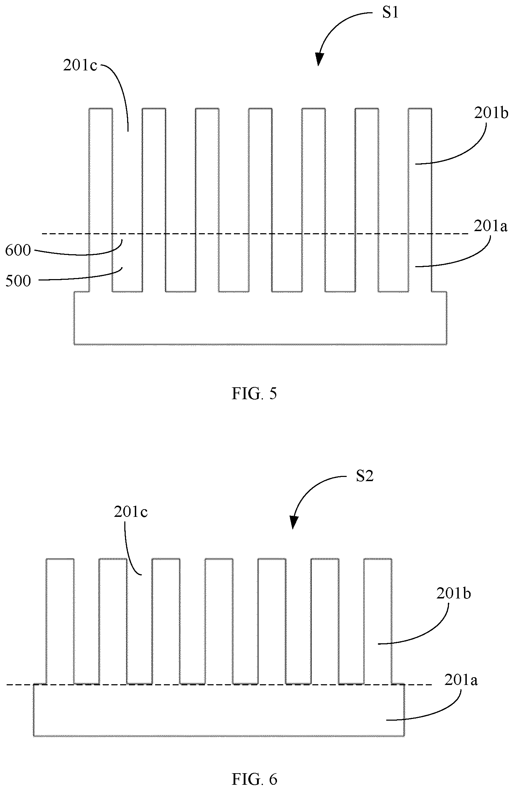

The dashed line in FIG. 5 illustrates a boundary between the yoke part 201a and the tooth part 201b of the first laminated plate S 1. The dashed line in FIG. 6 illustrates a boundary between the yoke part 201a and the tooth part 201b of the second laminated plate S2. Each of the tooth parts 201b of laminated plates 201 in the lamination stack 200 has an equal dimension in the radial direction of the stator core 100. In the stacking direction, the ends of the tooth parts 201b of laminated plates 201 are aligned (refer to FIGs. 3 and 4). A dimension of each of the yoke parts 201a of laminated plates 201 in the radial direction of the stator core 100 can be equal or unequal.

In an embodiment, the first laminated plate S1 and the second laminated plate S2 in the lamination stack 200 may be the same laminated plate or different laminated plates. In this embodiment, the first laminated plate S1 and the second laminated plate S2 in the lamination stack 200 are different laminated plates. In addition, the first laminated plate S1 and the second laminated plate S2 can be adjacent in the stacking direction or separated by other laminated plates.

In an embodiment, the ventilation gap 400 can be formed by stator winding 102 and the laminated plate 201. For example, multiple laminated plates 201 include a first laminated plate S1 and a second laminated plate S2. In the stacking direction, the tooth part 201b of the first laminated plate S1 does not completely overlap with the tooth part 201b of the second laminated plate S2 in the tooth width direction, such that a ventilation gap of 400 between the stator winding 102 and the laminated plate 201 can be formed in the tooth width direction. The formation method of the ventilation gap 400 is simple. The following provides a detailed explanation of the formation method of the ventilation gap 400 in conjunction with the drawings.

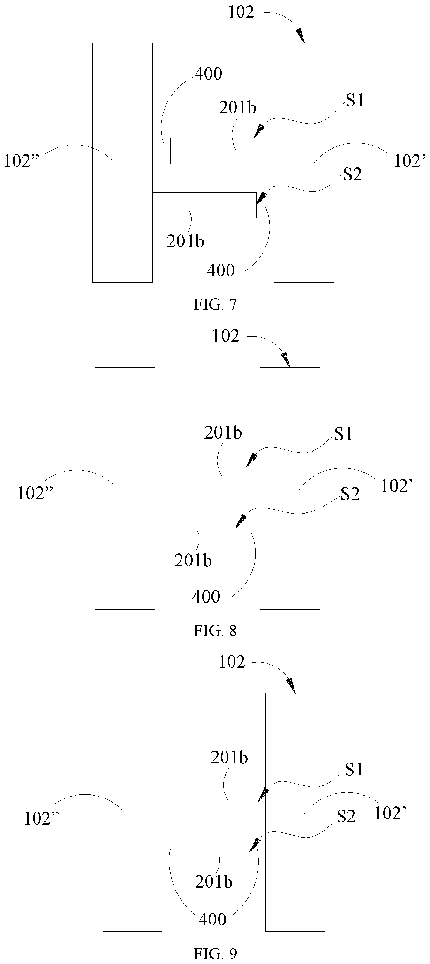

Referring to FIG. 7, FIG. 7 is a schematic diagram of a ventilation gap 400 formed between a stator winding 102 and a laminated plate 201. The view direction is from the tooth part 201b of the laminated plate 201 to the yoke part 201a.

In an embodiment, the tooth part 201b of the first laminated plate S1 and the tooth part 201b of the second laminated plate S2 are staggered in the tooth width direction. In the orthographic projection along the stacking direction, the projection region of the tooth part 201b of the first laminated plate S1 and the projection region of the tooth part 201b of the second laminated plate S2 are staggered in the tooth width direction, so that a ventilation gap 400 can be formed in the tooth width direction by the stator winding 102 and the laminated plate 201. The tooth widths of the tooth parts 201b of the first and second laminated plates S1 and S2 can be equal or unequal.

The stator winding 102 surrounds the outer side of the stator tooth 100b, and the stator winding 102 includes a first winding part 102' and a second winding part 102" located on different sides of the tooth parts 201b of the first laminated plate S1 and the second laminated plate S2 in the tooth width direction. The first winding part 102' contacts the tooth part 201b of the first laminated plate S1, to form a ventilation gap 400 with the tooth part 201b of the second laminated plate S2 in the tooth width direction, and the second stator winding 102" contacts the tooth part 201b of the second laminated plate S2, to form a ventilation gap 400 with the tooth part 201b of the first laminated plate S 1. The ventilation gaps 400 on both sides are staggered along the tooth width direction, and thus staggered along the axial direction of the stator core 100. In this embodiment, ventilation gaps 400 can be formed at both sides of the tooth width direction by the stator teeth 100b and the stator winding 102 on, which increases the ventilation area and heat exchange area.

Refer to FIGs. 8 and 9, which are schematic diagrams of ventilation gaps 400 formed between stator windings 102 and laminated plates 201. The view direction is from the tooth part 201b of the laminated plate 201 to the yoke part 201a.

In an embodiment, the tooth width of the tooth part 201b of the first laminated plate S1 is larger than the tooth width of the tooth part 201b of the second laminated plate S2. In the orthographic projection along the stacking direction, the projection region of the tooth part 201b of the second laminated plate S2 is located in the projection region of the tooth part 201b of the first laminated plate S1, and the tooth part 201b of the second laminated plate S2 is staggered from the tooth part 201b of the first laminated plate S1 on at least one side in the tooth width direction, such that there is a ventilation gap 400 in the tooth width direction between the stator winding 102 and the laminated plates 201.

In the embodiment shown in FIG. 8, the tooth part 201b of the first laminated plate S1 is aligned with the tooth part 201b of the second laminated plate S2 on one side in the tooth width direction, and the other side is staggered, such that there is a ventilation gap 400 between the stator winding 102 and the laminated plate 201 on one side in the tooth width direction. For example, the stator winding 102 includes a first winding part 102' and a second winding part 102" located on different sides of the tooth parts 201b of the first laminated plate S1 and the second laminated plate S2 along the tooth width direction. The first winding part 102' contacts the tooth part 201b of the first laminated plate S1, to form a ventilation gap 400 with the tooth part 201b of the second laminated plate S2 in the tooth width direction, and the second winding part 102" contacts the tooth parts 201b of the first laminated plate S1 and the second laminated plate S2. In this embodiment, the tooth part 201b of the first laminated plate S1 is aligned with the tooth part 201b of the second laminated plate S2 on the left side in the tooth width direction. In other embodiments, the tooth part 201b of the first laminated plate S1 and the tooth part 201b of the second laminated plate S2 can be aligned on the right side in the tooth width direction.

In the embodiment shown in FIG. 9, the tooth part 201b of the first laminated plate S1 and the tooth part 201b of the second laminated plate S2 are aligned along a width-wise centerline of the tooth. The tooth part 201b of the first laminated plate S1 and the tooth part 201b of the second laminated plate S2 are staggered on both sides in the tooth width direction, such that there are ventilation gaps 400 between the stator winding 102 and the laminated plate 201 on both sides in the tooth width direction. For example, the stator winding 102 includes a first winding part 102' and a second winding part 102" located on different sides of the tooth parts 201b of the first and second laminated plates S1 and S2 along the tooth width direction. The first winding part 102' contacts the tooth part 201b of the first laminated plate S1, to form a ventilation gap 400 with the tooth part 201b of the second laminated plate S2, and the second winding part 102" contacts the tooth part 201b of the first laminated plate S1, to form a ventilation gap 400 with the tooth part 201b of the second laminated plate S2, such that there are ventilation gaps 400 between the stator winding 102 and the laminated plate 201 on both sides in the tooth width direction, which increases the ventilation area and heat exchange area.

Refer to FIG. 10, which is a schematic diagram of a lamination stack 200 according to an embodiment of the present disclosure.

In the embodiment shown in FIG. 10, the lamination stack 200 includes multiple first laminated plates S1 and multiple second laminated plates S2. The multiple first laminated plates S1 and the multiple second laminated plates S2 are alternately arranged, where each first laminated plate S1 is adjacent to a second laminated plate S2. The tooth parts 201b of each second laminated plate S2 are aligned with the tooth parts 201b of the first laminated plate S1 on one side in the tooth width direction, and the other side is staggered, to form multiple ventilation gaps 400 on one side of the stator teeth 100b. The multiple ventilation gaps 400 are arranged along the axial direction.

Refer to FIG. 11, which is a schematic diagram of a lamination stack 200 according to an embodiment of the present disclosure.

In the embodiment shown in FIG. 11, the lamination stack 200 includes multiple first laminated plates S1 and multiple second laminated plates S2. The multiple first laminated plates S1 and the multiple second laminated plates S2 are alternately arranged, where each first laminated plate S1 is adjacent to a second laminated plate S2. A tooth part 201b of a first laminated plate S1 is aligned with a tooth part 201b of a second laminated plate S2 on a side in the tooth width direction. For example, tooth parts 201b of a part of the first laminated plates S1 are aligned with tooth parts 201b of the second laminated plates S2 on the left side in the tooth width direction, while tooth parts 201b of a part of the first laminated plates S1 are aligned with the tooth parts 201b of the second laminated plates S2 on the right side in the tooth width direction, to form multiple ventilation gaps 400 that are located on both sides of the stator teeth 100b, which makes the spatial distribution of ventilation gaps 400 more uniform.

In the embodiments shown in FIGs. 10 and 11, there are widthwise multiple ventilation gaps 400 between multiple stator windings 102 and stator teeth 100b respectively adjacent to the stator windings 102, and the multiple ventilation gaps 400 are distributed along the circumferential direction of the stator core 100.

It should be noted here that one stator winding 102 can be mounted on the outer side of each stator tooth 100b, so each stator winding 102 can be adjacent to three stator teeth 100b, that is, a stator tooth 100b mounted by the stator winding 102 and the stator teeth 100b located on two sides of the stator tooth 100b.

Refer to FIG. 1 again. The cooling airduct 300 includes a radial airduct 301 extending along the radial direction of the stator core 100 and an axial airduct 302 extending along the axial direction of the stator core 100. The radial airduct 301 is connected to the axial airduct 302 and is further connected to the ventilation gap 400 and the cavity 10a at the hollow region of the stator core 100. In this way, the cooling airduct 300 forms a curved airduct. By the curved airduct, on the one hand, the cooling airduct 300 can be formed within the stacked structure of multiple laminated plates 201, which is convenient to set up. For example, there is no need to set up a structure to support the cooling airduct. On the other hand, the curved airduct can play a flow disturbing role to a certain extent, so that the cooling medium A has relatively moderate impact and mixing in the cooling airduct 300, which has a small influence on a flow resistance, and is favorable for sufficient heat exchange between the cooling medium A and the generator stator 10.

In the embodiment shown in FIG. 1, there are multiple cooling airducts 300 arranged along the axial direction and circumferential direction of the stator core 100. Each cooling airduct 300 is connected to the ventilation gap 400 and the cavity 10a at the hollow region of the stator core 100. In other embodiments, the axial airduct 302 can penetrate the lamination stack 200 along the axial direction of the stator core 100 (refer to FIG. 4). By this setting, the cooling medium A can be fully mixed after entering the axial airduct 302, enhancing the heat transfer effect.

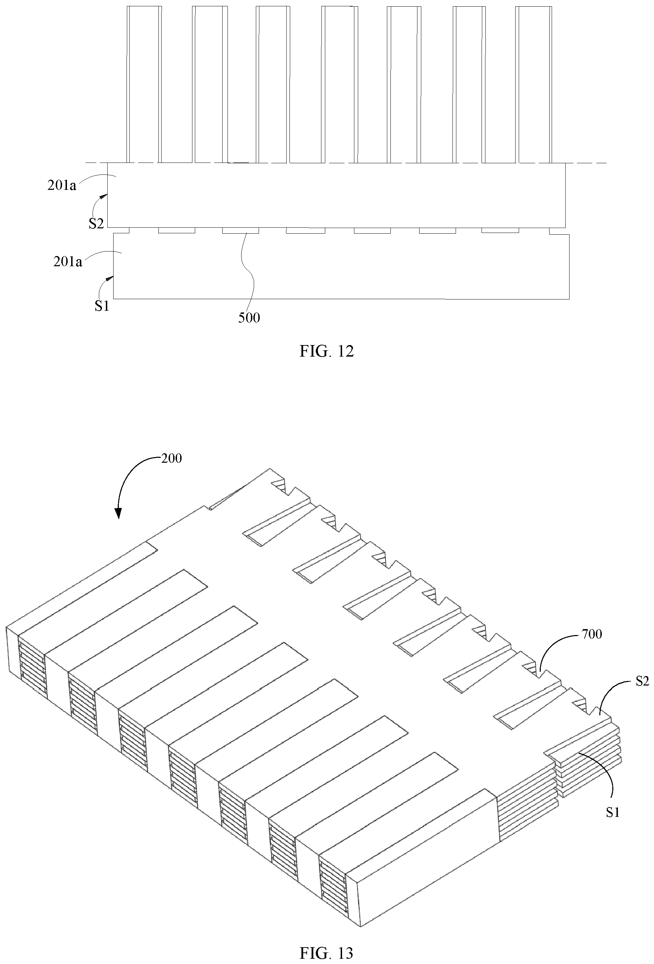

Refer to FIGs. 4, 5, 6, and 12. FIG. 12 is a schematic diagram of an axial airduct 302 formed by stacking a first laminated plate S 1 and a second laminated plate S2.

The lamination stack 200 is provided with an axial airduct 302. In an embodiment, at least one of the yoke part 201a of the first laminated plate S1 and the yoke part 201a of the second laminated plate S2 is provided with a notch 500 that penetrates through along the thickness direction, where the notch is used to form the axial airduct 302. The formation method of the axial airduct 302 is simple.

Refer to FIG. 12. Along the radial direction of the stator core 100, a dimension of the yoke part 201a of the second laminated plate S2 is smaller than a dimension of the yoke part 201a of the first laminated plate S1. The yoke part 201a of the first laminated plate S1 is provided with a notch 500 that penetrates through along the thickness direction. In the orthographic projection along the stacking direction, the projection region of the notch 500 is located outside the projection region of the yoke part 201a of the second laminated plate S2, such that the notch forms the axial airduct 302. In this embodiment, by reducing the radial dimension of the yoke part 201a of the second laminated plate S2 until the notch 500 is exposed from the yoke part 201a of the second laminated plate S2 to form a gap, the gap is used as the axial airduct 302, which makes the structure of the second laminated plate S2 simple and convenient for processing and manufacturing, and can reduce material costs without affecting the magnetic circuit of the yoke part 201a of the second laminated plate S2.

In the embodiment shown in FIG. 12, there may be multiple notches 500, which are at the yoke part 201a of the first laminated plate S1 and arranged along the circumferential direction of the stator core 100, such that multiple axial airducts 302 are formed to increase a flow rate of the cooling medium A passing through the axial airducts 302. Moreover, due to the small radial dimension of the yoke part 201a of the second laminated plate S2, multiple axial airducts 302 are interconnected along the circumferential direction of the stator core 100, which is conducive to the full mixing of the cooling medium A along the circumferential direction in the axial airduct 302, thereby reducing the circumferential non-uniformity of the temperature of the stator core 100.

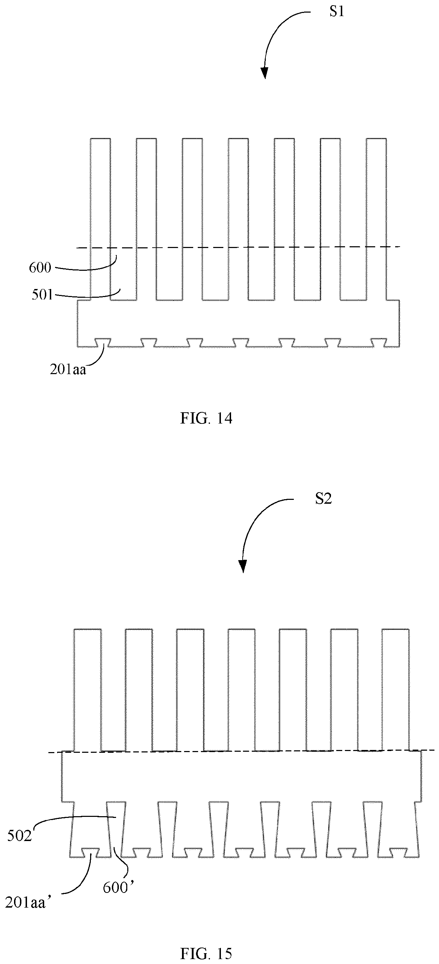

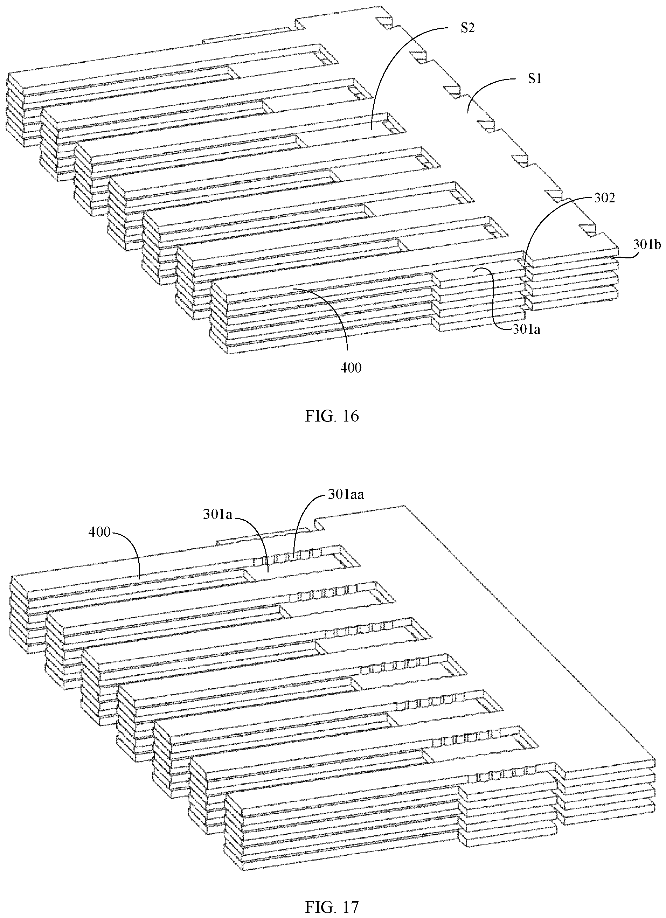

Refer to FIGs. 13 to 16. FIG. 13 is a schematic diagram of a lamination stack 200 according to an embodiment of the present disclosure. FIGs. 14 and 15 are schematic diagrams of a first laminated plate S1 and a second laminated plate S2 of the lamination stack 200 shown in FIG. 13. FIG. 16 is a schematic diagram of a partial structure of the lamination stack 200 shown in FIG. 13.

In an embodiment, along the radial direction of the stator core 100, a dimension of the yoke part 201a of the first laminated plate S1 is equal to a dimension of the yoke part 201a of the second laminated plate S2, and the yoke part 201a of the first laminated plate S1 is aligned with the yoke part 201a of the second laminated plate S2 along the radial direction of the stator core 100. In this case, both the yoke part 201a of the first laminated plate S1 and the yoke part 201a of the second laminated plate S2 may have notches 500 to form an axial airduct 302. For example, referring to FIGs. 14 and 15, the notch 500 includes a first notch 501 and a second notch 502. The yoke part 201a of the first laminated plate S1 is provided with the first notch 501, and the yoke part 201a of the second laminated plate S2 is provided with the second notch 502. In the stacking direction, the first notch 501 partially overlaps with the second notch 502 to form the axial airduct 302. In this embodiment, the axial airduct 302 is formed by overlapping parts of the first notch 501 and the second notch 502. Therefore, dimensions of the first notch 501 and dimensions of the second notch 502 together determine a flow area of the axial airduct 302, which makes a shape and dimensions of the axial airduct 302 more diversified. The dimensions and shapes of the first notch 501 and the second notch 502 are not limited.

In an embodiment, there are multiple first notches 501 and multiple second notches 502. The first notches 501 are at the yoke part 201a of the first laminated plate S1 and arranged along the circumferential direction of the stator core 100, and the second notches 502 are at the yoke part 201a of the second laminated plate S2 and arranged along the circumferential direction of the stator core 100. In the stacking direction, the first notches 501 respectively correspond to the second notches 502, and partially overlap with the second notches 502, to form multiple overlapping parts, thereby forming multiple axial airducts 302, which increases the number of axial airducts 302, and increases the flow rate of the cooling medium A passing through axial airducts 302.

Refer to FIGs. 1, 4, and 16. In an embodiment, the radial airduct 301 includes a winding side radial section 301a and a cavity side radial section 301b that are distributed radially on two sides of the axial airduct 302 and are interconnected. The winding side radial section 301a is connected to the ventilation gap 400 and the axial airduct 302, and the cavity side radial section 301b is connected to the axial airduct 302 and the cavity 10a at the hollow region of the stator core 100. In this embodiment, the winding side radial section 301a is provided on the side of the axial airduct 302 close to the ventilation gap 400, to achieve connection between the ventilation gap 400 and the axial airduct 302, and the cavity side radial section 301b is provided on the side of the axial airduct 302 close to the cavity 10a, to achieve connection between the axial airduct 302 and the cavity 10a, thereby achieving connection between the ventilation gap 400 and the cooling airduct 300, which enables the cooling medium A to flow from the airgap 30 to the cavity 10a.

The lamination stack 200 is provided with the winding side radial section 301a. In an embodiment, referring to FIG. 5, the yoke part 201a of the first laminated plate S1 is provided with a connection part 600 in the slot part. The connection part 600 in the slot part is connected to the notch 500 and the slot part 201c. The connection part 600 in the slot part forms the winding side radial section 301a on a side of the yoke part 201a of the second laminated plate S2. The winding side radial section 301a has a simple structure and is easy to achieve. The formation of the winding side radial section 301a is not limited to this.

In the embodiments shown in FIGs. 4 and 16, multiple laminated plates 201 include multiple first laminated plates S1 and multiple second laminated plates S2. The multiple first laminated plates S1 and the multiple second laminated plates S2 are alternately arranged. Each first laminated plate S1 is adjacent to a second laminated plate S2, thereby forming multiple winding side radial sections 301a distributed along the axial direction of the stator core 100. The multiple winding side radial sections 301a can increase the flow rate of the cooling medium A, which increases the heat dissipation area of the yoke part 201a and enables multiple laminated plates 201 to be fully cooled.

In the embodiments shown in FIGs. 4 and 16, the winding side radial section 301a is equivalent to a gap between the yoke parts 201a of two second laminated plates S2 adjacent to a first laminated plate S1 at the connection part 600 in the slot part.

Multiple connection parts 600 in the slot part can be provided, and multiple connection parts 600 in the slot part respectively correspond to multiple slot parts 201c and multiple notches 500, thereby forming multiple winding side radial sections 301a arranged along the circumferential direction of the stator core 100.

Refer to FIG. 17, which is a schematic diagram of a lamination stack 200 according to an embodiment of the present disclosure.

In an embodiment, the flow area of a winding side radial section 301a is greater than the flow area of a ventilation gap 400. When the cooling medium A flows from the ventilation gap 400 to the winding side radial section 301a, the flow rate significantly decreases, resulting in a weakened heat transfer effect. If a sudden expansion is provided at the connection between the ventilation gap 400 and the winding side radial section 301a, a vortex region will be formed downstream of the sudden expansion, causing significant local flow resistance. Based on this, the lamination stack 200 includes a protruding structure 301aa protruding from an inner wall of the winding side radial section 301a, and a protruding direction of the protruding structure 301aa is different from an extension direction of the winding side radial section 301a. The protruding structure 301aa can play a role of a turbulator. When the cooling medium A flows along the winding side radial section 301a, the cooling medium A collides with the protruding structure 301aa, causing the airflow in the winding side radial section 301a to be disturbed, which can increase the flow rate and turbulence degree of the cooling medium A, enhance the heat transfer effect, and suppress the vortex region generated by the local sudden expansion, thereby reducing a local flow friction loss and enhancing the heat transfer effect. In this embodiment, the protruding structure 301aa is widthwise arranged on at least one sidewall of the first notch 501 of the first laminated plate S1. The shape of the protruding structure 301aa is not limited. The shape of the protruding structure 301aa can be circular, trapezoidal, triangular, etc., but a sharp-angle structure should be avoided as much as possible. There is no limit to the number of protruding structures 301aa. There can be multiple protruding structures 301aa arranged along a sidewall of the notch 500.

The lamination stack 200 is provided with the cavity side radial section 301b. In an embodiment, as shown in FIGs. 4 to 6, along the radial direction of the stator core 100, the dimension of the yoke part 201a of the second laminated plate S2 is smaller than the dimension of the yoke part 201a of the first laminated plate S1. The yoke part 201a of the second laminated plate S2 is set so that a gap is formed at a side of the yoke part 201a of the first laminated plate S1 facing the second laminated plate S2, and the gap connects the axial airduct 302 and the cavity 10a, and a channel of the gap connecting the axial airduct 302 and the cavity 10a forms the cavity side radial section 301b. In this embodiment, due to a small radial dimension of the yoke part 201a of the second laminated plate S2, the cavity side radial section 301b are connected along the circumferential direction of the stator core 100, resulting in a large flow area of the single cavity side radial section 301b, such that the cooling medium A can be fully mixed in the cavity side radial section 301b, improving heat transfer efficiency. The formation method of the cavity side radial section 301b is not limited to this.

There can be multiple cavity side radial sections 301b along the axial direction of the stator core 100. In the embodiment shown in FIG. 4 and FIG. 16, multiple laminated plates 201 include multiple first laminated plates S1 and multiple second laminated plates S2. The multiple first laminated plates S1 and the multiple second laminated plates S2 are alternately arranged, with each first laminated plate S1 adjacent to a second laminated plate S2. In this way, a gap can be formed on a side of the yoke part 201a of each first laminated plate S1 facing the second laminated plate S2, thereby forming multiple cavity side radial sections 301b axially distributed.

In the embodiment shown in FIG. 4, the cavity side radial section 301b is equivalent to the gap between ends of yoke parts 201a of two first laminated plates S1 adjacent to a second laminated plate S2 far from the tooth part 201b.

In another embodiment, as shown in FIGs. 14 to 16, along the radial direction of the stator core 100, the dimension of the yoke part 201a of the second laminated plate S2 is equal to the dimension of the yoke part 201a of the first laminated plate S 1. The yoke part 201a of the second laminated plate S2 is provided with a cavity connection notch 600' that penetrates through along the thickness direction. One end of the cavity connection notch 600' is connected to the cavity 10a, and the other end of the cavity connection notch 600' ends at the yoke part 201a of the second laminated plate S2. The cavity connection notch 600' connects the axial airduct 302 and the cavity 10a, and a channel of the cavity connection notch 600' connecting the axial airduct 302 and the cavity 10a forms the cavity side radial section 301b. In this embodiment, a cavity side radial section 301b can be formed by providing a cavity connection notch 600' at the yoke part 201a of the second laminated plate S2, and the shape and dimensions of the cavity connection notch 600' are not limited, thereby making the shape and dimensions of the cavity side radial section 301b more diverse.

It should be noted that the cavity connection notch 600' can also be set at the yoke part 201a of the first laminated plate S1, but the position of the cavity connection notch 600' is determined by the connection part 600 in the slot part. For example, when the yoke part 201a of the first laminated plate S1 is provided with a connection part 600 in the slot part, the cavity connection notch 600' is set at the yoke part 201a of the second laminated plate S2, and vice versa. A purpose of this setting is to prevent a significant reduction in local flux path and significant increase in local magnetic resistance of the yoke part 201a when the connection part 600 in the slot part and the cavity connection notch 600' are both set on the same laminated plate 201.

The present disclosure does not limit the structure of the notch 500 and the connection part 600 in the slot part. In an embodiment, referring to FIG. 5, the notch 500 and the connection part 600 in the slot part are provided on a part of the yoke part 201a radially opposite to the slot part 201c, and the yoke part 201a is provided with a hole that penetrates through along a slot width direction at the notch 500 and the connection part 600 in the slot part. A width of the notch 500 and a width of the connection part 600 in the slot part can be equal to or unequal to the width of the slot part 201c. In this embodiment, the width of the notch 500 and the width of the connection part 600 in the slot part are equal to the width of the slot part 201c, which can make the flow area of the winding side radial section 301a greater than the flow area of the ventilation gap 400.

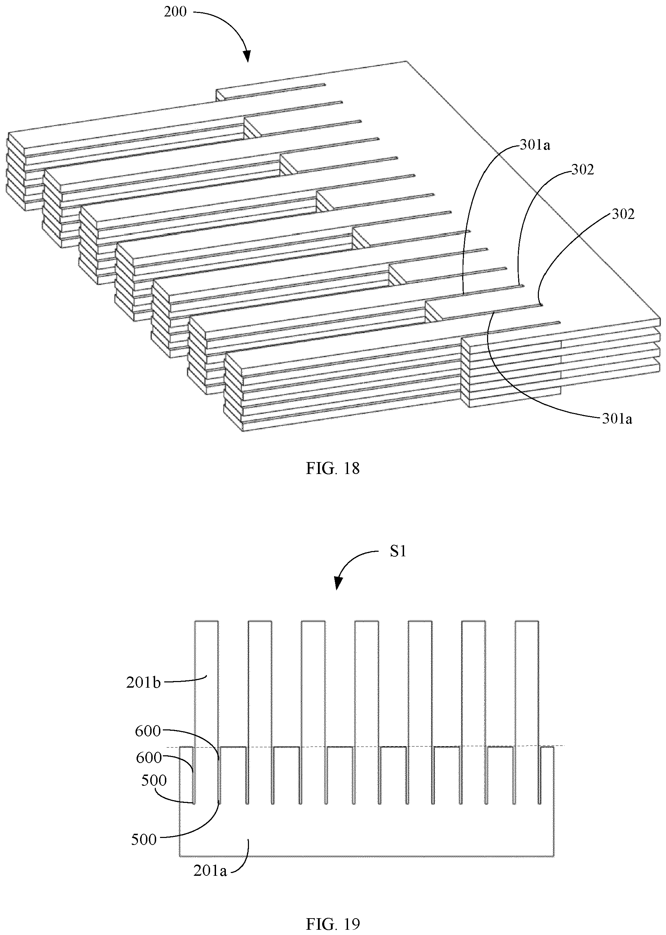

Refer to FIGs. 18 and 19. FIG. 18 is a schematic diagram of a lamination stack 200 according to an embodiment of the present disclosure. FIG. 19 is a schematic diagram of a first laminated plate S1 in the lamination stack shown in FIG. 18.

In an embodiment, notches 500 and connection parts 600 in the slot part are widthwise provided on both sides of one tooth part 201b of the first laminated plate S1. The dimensions of the notches 500 and the dimensions of the connection parts 600 in the slot part in the tooth width direction are smaller than the dimension of the slot part 201c in the tooth width direction. In this way, the dimensions of the notches 500 and the dimensions of the connection parts 600 in the slot part in the tooth width direction decrease, which increases a physical area of the yoke part 201a of the first laminated plate S1, and correspondingly, decreases a hollow area of the yoke part 201a of the first laminated plate S1, thereby increasing a structural strength of the first laminated plate S1, especially a structural strength of a part of the yoke part 201a close to the slot part 201c. Moreover, the flow area of the winding side radial section 301a formed by the connection part 600 in the slot part is reduced, which can reduce the difference between a flow area of the winding side radial section 301a and a flow area of the ventilation gap 400, enabling the cooling medium A to maintain high-speed flow in the winding side radial section 301a, ensuring heat exchange efficiency. In addition, the notch 500 and the connection part 600 in the slot part in this embodiment can be used as a magnetic isolation bridge to eliminate partial harmonics and reduce eddy current losses between the generator stator 10 and the generator rotor 20. Utilizing a modulation effect of the magnetic isolation bridge is conducive to increase the torque of generator 1.

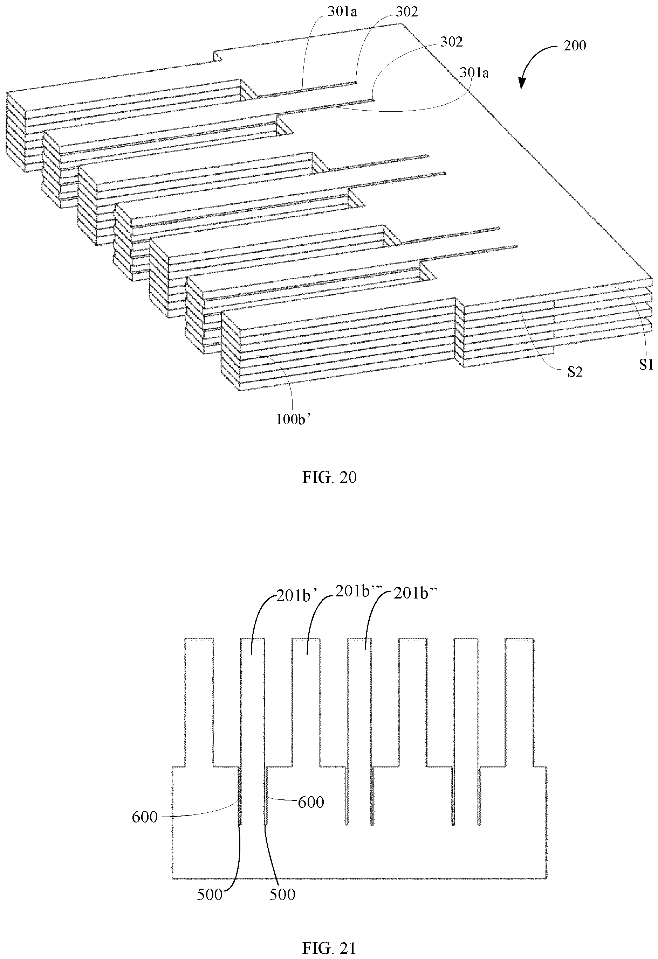

Refer to FIGs. 20 and 21. FIG. 20 is a schematic diagram of a lamination stack 200 according to an embodiment of the present disclosure. FIG. 21 is a schematic diagram of a first laminated plate S1 in the lamination stack shown in FIG. 20.

In some embodiments, the first laminated plate S1 includes multiple tooth parts 201b, and the multiple tooth parts 201b include a first tooth part 201b', a second tooth part 201b" and a third tooth part 201b'", where the first tooth part 201b' is separated from the second tooth part 201b" by at least one third tooth part 201b'". Notches 500 and connection parts 600 in the slot part are widthwise provided on both sides of the first tooth part 201b', and notches 500 and connection parts 600 in the slot part are widthwise provided on both sides of the second tooth part 201b". Therefore, the winding side radial section 301a and the axial airduct 302 are distributed on both sides of the first tooth part 201b 'and on both sides of the second tooth part 201b". This lamination stack 200 can be applied to generators including main stator windings and backup stator windings. For example, some long-term working stator windings 102 are the main stator windings and can be mounted on the first tooth parts 201b' or the second tooth parts 201b". Therefore, the cooling medium A can flow into the ventilation gap 400, connection part 600 in the slot part and notch 500, which effectively enhances the cooling of the main stator winding. Other stator windings 102 may have characteristics of short working time, small load and low probability of high ambient temperature, and a demand for cooling is smaller than a demand for cooling of the main stator winding, thus are used as backup windings. Therefore, the backup windings can be mounted on the third tooth parts 201b'", which can reduce the ventilation gaps 400 or not set the ventilation gap 400 between the third tooth parts 201b'" and stator windings 102. In the embodiment shown in FIG. 21, the tooth widths of multiple tooth parts 201b of the first laminated plate S1 are unequal. In some embodiments, the tooth widths of the first tooth part 201b' and the second tooth part 201b" are smaller than the tooth widths of the tooth part 201b of the second laminated plate S1, and the tooth width of the third tooth part 201b'" is equal to the tooth width of the tooth part 201b of the second laminated plate S1. The tooth widths of multiple tooth parts 201b of the second laminated plate S1 can be equal.

In addition, a manner of the stator winding 102 being mounted on the stator tooth 100b is not limited, and can be either double-layer centralized or single-layer centralized. A single-layer centralized manner means that every other stator tooth 100b is mounted with a stator winding 102, and each stator slot 100c accommodates one coil side of the stator winding 102. A double-layer centralized manner means that each stator tooth 100b is mounted with a stator winding 102, and each stator slot 100c accommodates two coil sides of different stator windings 102. In an embodiment, as shown in FIG. 20, a single-layer centralized manner can be used, and the stator winding 102 is preferably mounted on the stator tooth 100b' in which the widths of the tooth part 201b of the first laminated plate S1 and the widths of the tooth part 201b of the second laminated plate S2 are equal. In this way, on the one hand, a structure of the stator tooth 100b mounted with the stator winding 102 is the same as a structure of a conventional stator tooth, which makes installation convenient, and makes an assembly accuracy requirement for a stator teeth 100b that is not mounted with a stator winding 102 not high. On the other hand, when there is a gap between the stator winding 102 and the stator tooth 100b that is not mounted with a stator winding 102, it means that there is also a gap between the stator winding 102 and the ventilation gap 400, such that the cooling medium A can further flow axially along the gap and then enter the ventilation gap 400, which enhances the flow mixing of axial and radial flows, thereby enhancing heat transfer. Furthermore, the ventilation gap 400 is not easy to be blocked during the vacuum impregnation process for the electrical machine.

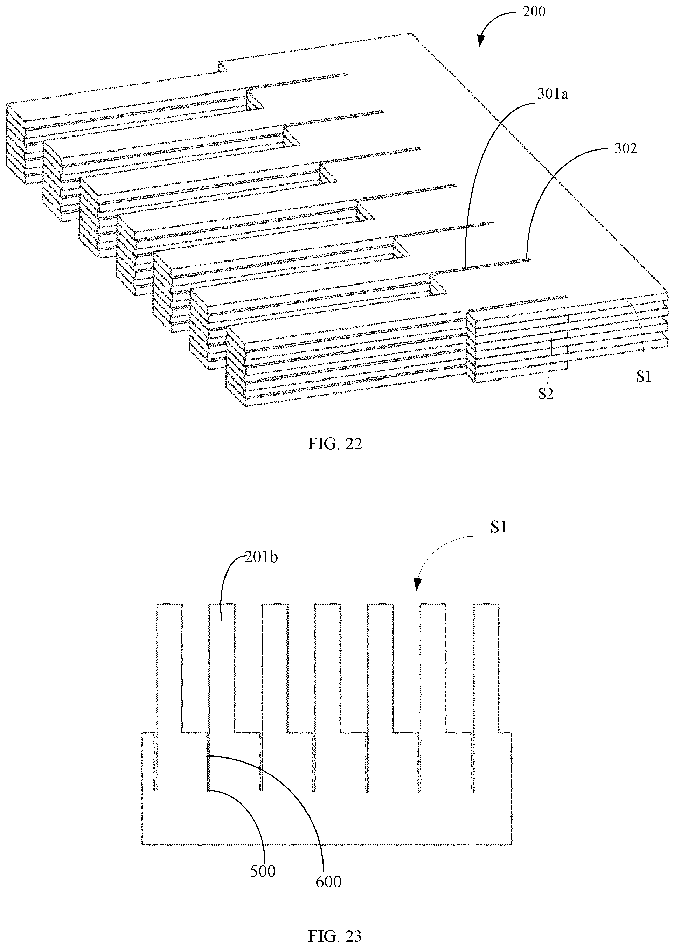

Refer to FIGs. 22 and 23. FIG. 22 is a schematic diagram of a lamination stack 200 according to an embodiment of the present disclosure. FIG. 23 is a schematic diagram of a first laminated plate S1 in the lamination stack shown in FIG. 22.

In an embodiment, a notch 500 and a connection part 600 in the slot part are provided on one side of one tooth part 201b in the tooth width direction. The dimension of the notch 500 and the dimension of the connection part 600 in the slot part in the tooth width direction are smaller than the dimension of the slot part 201c in the tooth width direction. In this embodiment, the dimensions of the notch 500 and the connection part 600 in the slot part are smaller in the tooth width direction, and the number of the notches 500 and the connection parts 600 in the slot part is less, which further improves the structural strength of the first laminated plate S 1.

In the embodiment shown in FIGs. 18, 20, and 22, the second laminated plate S2 shown in FIG. 5 can be adopted, which is not limited.

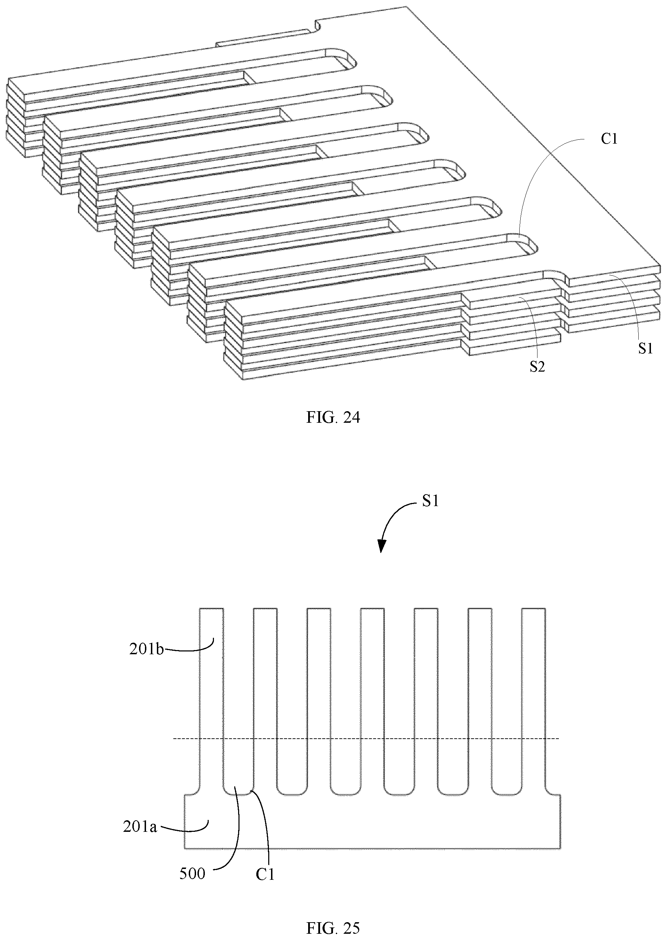

Refer to FIGs. 24 and 25. FIG. 24 is a schematic diagram of a lamination stack 200 according to an embodiment of the present disclosure. FIG. 25 is a schematic diagram of a first laminated plate S1 in the lamination stack shown in FIG. 24.

A bottom corner of the notch 500 is configured as a rounded corner C1, which can make the magnetic circuit of the first laminated plate S1 smoother at the notch 500, thereby reducing the magnetic resistance near the notch 500 and reducing the magnetic leakage and iron loss caused by the bottom of the notch 500.

In some embodiments, in a radial direction from the tooth part 201b to the yoke part 201a, the width of the notch 500 can gradually decrease, which can reduce the dimension of the notch 500 and increase the effective magnetic width, thereby further reducing the magnetic circuit resistance.

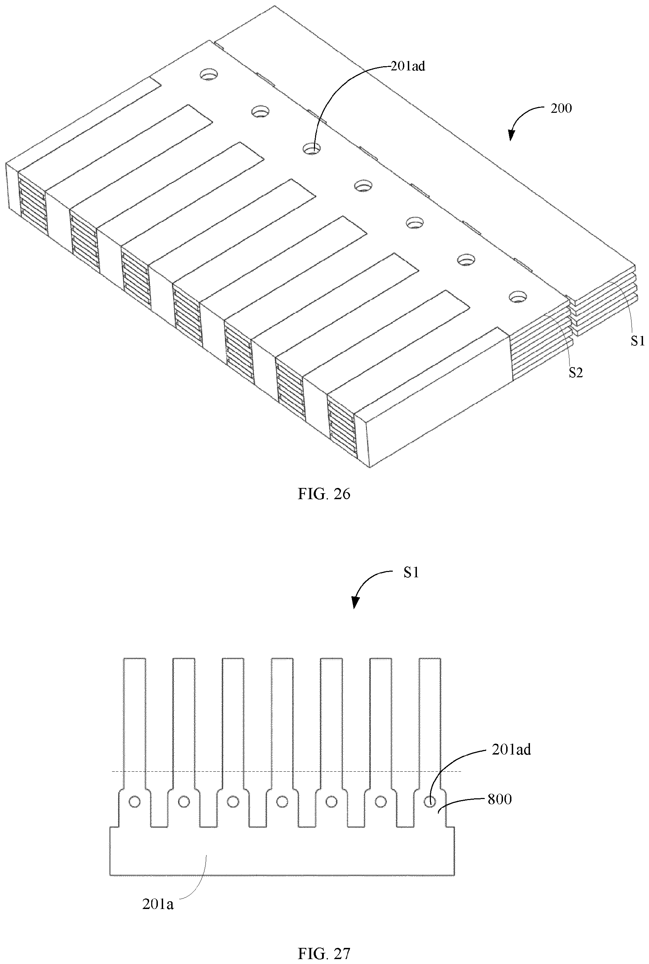

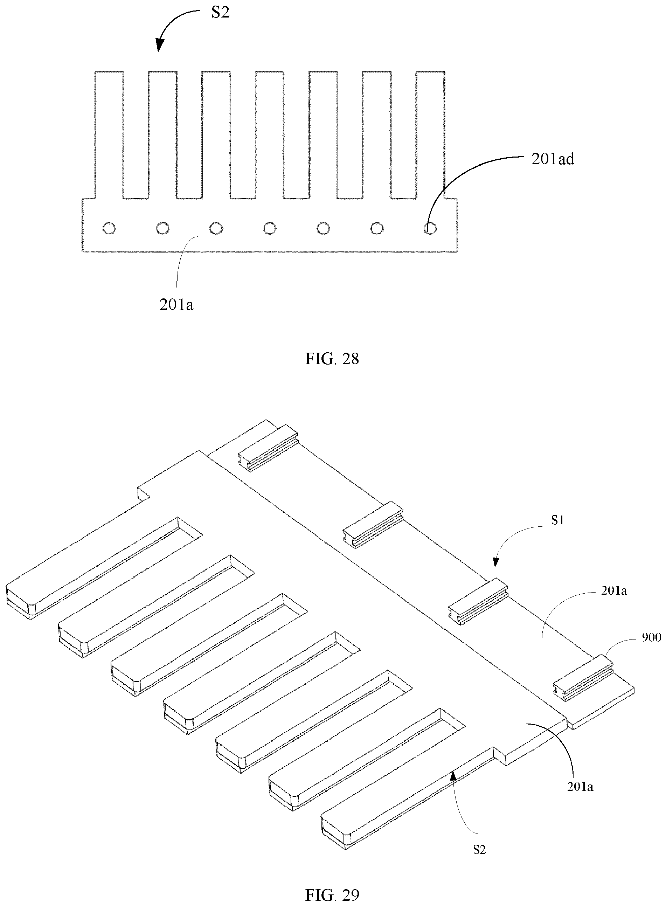

Refer to FIGs. 26 to 28. FIG. 26 is a schematic diagram of a lamination stack 200 according to an embodiment of the present disclosure. FIG. 27 is a schematic diagram of a first laminated plate S1 in the lamination stack shown in FIG. 26. FIG. 28 is a schematic diagram of a second laminated plate S2 of the lamination stack shown in FIG. 26.

In order to ensure that multiple laminated plates 201 in the lamination stack 200 are completely fixed in the axial direction of the stator core 100 and achieve a high lamination factor, the lamination stack 200 may include a fixing component (not shown). The fixing component compresses the multiple laminated plates 201 along the stacking direction.

In an embodiment, the yoke part 201a of the first laminated plate S1 and the yoke part 201a of the second laminated plate S2 are provided with connection holes 201ad that are coaxially arranged. The fixing component includes a connecting component and pressing plates located at both axial ends of the stator core 100. The connecting component is assembled in the connection hole 201ad, and both ends of the connecting component are connected to the pressing plate, to compress the multiple laminated plates 201 along the stacking direction. The connecting component may include a tension screw, which is not limited.

Due to the notch 500 on the yoke part 201a of the first laminated plate S1, the connection hole 201ad has a significant impact on the magnetic circuit of the first laminated plate S1, which is easy to cause the increase of the magnetic resistance of the first laminated plate S1. In order to reduce the magnetic resistance of the first laminated plate S1, a widening part 800 can be set on the yoke part 201a of the first laminated plate S 1. The widening part 800 can be widthwise set on at least one side of the connection hole 201ad, and the widening part 800 can increase the width of the yoke part 201a of the first laminated plate S1 at the connection hole 201ad to compensate for an area of the yoke part 201a of the first laminated plate S1 at the connection hole 201ad, which can reduce the magnetic resistance.

Refer to FIGs. 13 to 15. The lamination stack 200 includes a radial tensing component. Through a radial tensioning force applied by the radial tensing component, the multiple laminated plates 201 are positioned in the radial direction of the stator core 100. The implementation method of the radial tensing component is not limited. In an embodiment, the lamination stack 200 includes a positioning slot 700. For example, the dimensions of the first and second laminated plates S1 and S2 along the radial direction of the stator core 100 are equal, and the yoke parts 201a of the two are aligned. The yoke part 201a of the first laminated plate S1 is provided with a first positioning slot 201aa, and the yoke part 201a of the second laminated plate S2 is provided with a second positioning slot 201aa'. The first positioning slot 201aa corresponds to the second positioning slot 201aa' along the stacking direction, forming a positioning slot 700 that penetrates through axially. The radial tensing component may include a positioning support (not shown). The positioning support is at least partially assembled in the positioning slot 700 to radially position the multiple laminated plates 201. The shape of the positioning slot 700 is not limited. In this embodiment, the positioning slot 700 adopts a dovetail structure, and correspondingly, the positioning support can be with a dovetail structure, which is not limited.

Refer to FIG. 29, FIG. 29 is a schematic diagram of a first laminated plate S1 and a second laminated plate S2 of a lamination stack 200 that are stacked according to an embodiment of the present disclosure.

In an embodiment, the lamination stack 200 includes a first laminated plate S1, a second laminated plate S2 and a support structure 900, where the dimension of the first laminated plate S1 in the radial direction of the stator core 100 is greater than the dimension of the second laminated plate S2 in this direction, and the support structure 900 supports the yoke part 201a of the first laminated plate S1 along the axial direction of the stator core 100 to increase the strength of the yoke part 201a. There can be multiple support structures 900 arranged along the circumferential and axial directions of the stator core 100, thereby achieving multi-point support for the yoke part 201a of the first laminated plate S1. In an embodiment, the support structure 900 can support a side where the yoke part 201a of the first laminated plate S1 is located. When the cooling medium A flows along the winding side radial sections 301a, axial airducts 302 and cavity side radial sections 301b, since the multiple winding side radial sections 301a and the multiple axial airducts 302 are spaced in the circumferential direction, while the cavity side radial sections 301b are interconnected in the circumferential direction, a flow expansion process occurs when the cooling medium A flows into the cavity side radial sections 301b from the axial airducts 302, the flow velocity near the center of the expansion flow is high, and the flow velocity on both sides far from the center is low, therefore, the support structure 900 is far from the tooth part 201b, such that the support structure 900 can get away from the center position of the expansion flow, which can avoid forming significant resistance to the flow of the cooling medium A, and minimize the obstruction of the support structure 900 to the cooling medium A flowing from the axial airduct 302 to the cavity side radial section 301b.

In an embodiment, multiple laminated plates 201 include multiple first laminated plates S1 and multiple second laminated plates S2. The multiple first laminated plates S1 and the multiple second laminated plates S2 are alternately arranged, with each first laminated plate S1 adjacent to a second laminated plate S2. In this case, the support structure 900 can be arranged between the yoke parts 201a of two first laminated plates S1 adjacent to a second laminated plate S2. The structure of the support structure 900 is not limited and can be selected according to actual needs, such as I-shaped steel.

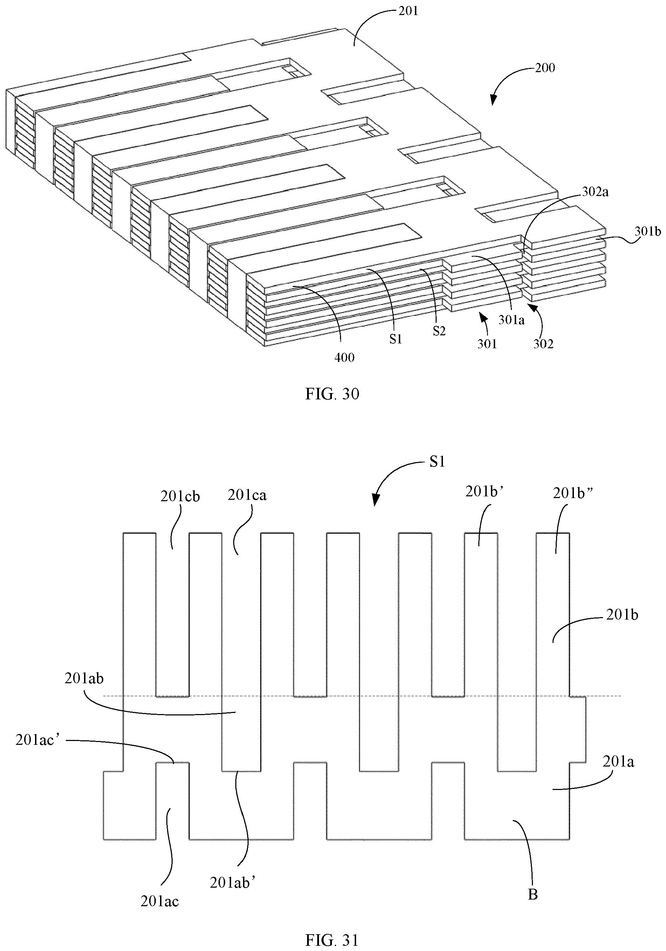

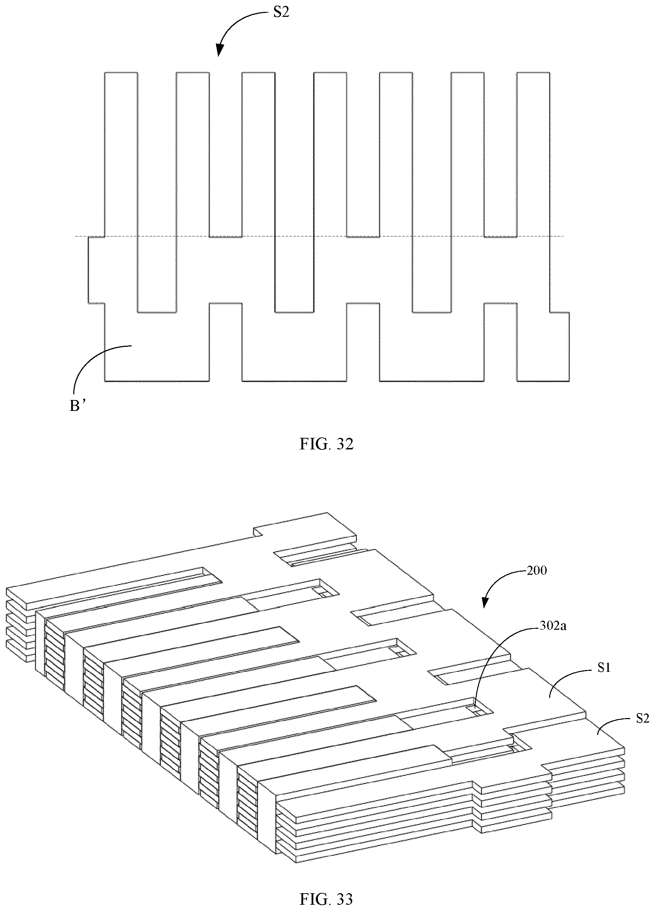

Refer to FIGs. 30 to 32. FIG. 30 is a schematic diagram of a partial structure of a lamination stack 200. FIG. 31 is a schematic diagram of a first surface of a laminated plate 201 of the lamination stack 200 shown in FIG. 30. FIG. 32 is a schematic diagram of a second surface of a laminated plate 201 of the lamination stack 200 shown in FIG. 30.

In an embodiment, the lamination stack 200 includes multiple identical laminated plates 201 stacked along the thickness direction. Due to the identical laminated plates 201, the processing, manufacturing, and assembly of the lamination stack 200 are simpler and more convenient, manufacturing costs are low, and laminated plates cannot be confused during stacking.

The laminated plate 201 includes a yoke part 201a and multiple tooth parts 201b connected to the yoke part 201a. A gap between two adjacent tooth parts 201b forms a slot part 201c, such that multiple slot parts 201c are formed. The multiple slot parts 201c include a first slot part 201ca and a second slot part 201cb. The yoke part 201a includes a first slot 201ab and a second slot 201ac that penetrate through along the thickness direction and extend along the radial direction of the stator core 100. One end of the first slot 201ab is connected to the first slot part 201ca, and the other end stops at the yoke part 201a forming a first stopping end 201ab'. One end of the second slot 201ac is connected to the cavity 10a, and the other end stops at the yoke part 201a forming a second stopping end 201ac'. Along the radial direction of the stator core 100, the second stopping end 201ac' is closer to the tooth part 201b than the first stopping end 201ab'. In this embodiment, by providing the first slot 201ab and the second slot 201ac on the laminated plate 201, multiple identical laminated plates 201 can be stacked to form a cooling airduct 300, achieving cooling for the stator core 100.

In the embodiment shown in FIG. 31, the first slot 201ab is equivalent to the first notch 501 and the connection part 600 in the slot part in FIG. 14, and the second slot 201ac is equivalent to the second notch 502 and the cavity connection notch 600' in FIG. 15.

In the embodiment shown in FIG. 31, the slot parts 201c include multiple first slot parts 201ca and multiple second slot parts 201cb, with the multiple first slot parts 201ca and the multiple second slot parts 201cb alternately arranged. There are multiple first slots 201ab respectively corresponding to the first slot parts 201ca, and there are multiple second slots 201ac respectively corresponding to the second slot parts 201cb. By increasing the number of the first slots 201ab and the second slots 201ac, more cooling airducts 300 can be formed in the lamination stack 200, which enables the stator core 100 to be fully cooled. The first slot parts 201ca and the second slot parts 201cb being alternately arranged means that each first slot part 201ca is adjacent to a second slot part 201cb.

In an embodiment, the widths of the multiple first slot parts 201ca are equal, the widths of the multiple second slot parts 201cb are equal, the widths of the multiple first slots 201ab are equal, and the widths of the multiple second slots 201ac are equal.

In the embodiment shown in FIG. 30, the cooling airduct 300 includes a radial airduct 301 extending along the radial direction of the stator core 100 and an axial airduct 302 extending along the axial direction of the stator core 100. The axial airduct 302 includes a first axial airduct 302a. The radial airduct 301 is connected to the first axial airduct 302a, forming a curved airduct structure. In the embodiment shown in FIG. 30, the ventilation gap 400, the radial airduct 301, the first axial airduct 302a and the cavity 10a at the hollow region of the stator core 100 are connected, which enables the cooling medium A to flow between the airgap 30 and the cavity 10a.

The formation method of the first axial airduct 302a is not limited. In an embodiment, as shown in FIG. 30, multiple laminated plates 201 include a first laminated plate S1 and a second laminated plate S2, where the first laminated plate S1 and the second laminated plate S2 are identical. In the stacking direction, the first slot 201ab of the first laminated plate S1 partially overlaps with the second slot 201ac of the second laminated plate S2, and overlapping parts form the first axial airduct 302a.

The stacking manner of the first laminated plate S1 and the second laminated plate S2 are not limited. In an embodiment, as shown in FIGs. 31 and 32, the laminated plate 201 includes a first surface B and a second surface B' opposite to each other along the thickness direction. The first surface B of the first laminated plate S1 contacts the first surface B of the second laminated plate S2. In the stacking direction, the first slot 201ab of the first laminated plate S1 partially overlaps with the second slot 201ac of the second laminated plate S2, and the overlapping parts form the first axial airduct 302a. The lamination stack 200 formed by stacking in the above manner is shown in FIG. 30. In this embodiment, the first laminated plate S1 and the second laminated plate S2 are stacked by a manner with a positive laminated plate and a negative laminated plate, to form a first axial airduct 302a, which has more diverse stacking manners.

The number of the tooth parts 201b of the laminated plate 201 can be even or odd. When an even number of tooth parts 201b are provided, the tooth parts 201b of the first laminated plate S1 is offset with the tooth parts 201b of the second laminated plate S2 by at least one tooth part 201b along the circumferential direction of the stator core 100, so that the first slot 201ab partially overlaps with the second slot 201ac.

In this embodiment, multiple and an odd number of tooth parts 201b are provided. The tooth parts 201b can have three, five, seven, nine, etc., which is not limited. When the laminated plate 201 is provided with an odd number of tooth parts 201b, the first surface B of the first laminated plate S1 contacts the first surface B of the second laminated plate S2, and the tooth part 201b in the middle of the first laminated plate S1 are stacked with the tooth part 201b in the middle of the second laminated plate S2. Stacked in this way, the tooth parts 201b of the first laminated plate S1 can be respectively stacked with the tooth parts 201b of the second laminated plate S2, without offsetting by any tooth part 201b, which makes the stacking structure of the lamination stack 200 more compact and tidy, with higher strength at both ends in the circumferential direction. In addition, by adopting this structure, a modularization of stator core 100 can be directly achieved, that is, the stator core 100 is divided into blocks along the circumferential direction to overcome the difficulties that a large-diameter stator is not easy to be stacked integrally and is inconvenient to transport.

In an embodiment, as shown in FIG. 31, a plurality of the tooth parts 201b include a first tooth part 201b' and a second tooth part 201b", the tooth width of the first tooth part 201b' is equal to the tooth width of the second tooth part 201b", the first tooth part 201b' of the first laminated plate is stacked with the first tooth part 201b' of the second laminated plate, and in the orthographic projection along the stacking direction, the projection region of the first tooth part 201b' of the first laminated plate S1 does not completely overlap with the projection region of the first tooth part 201b' of the second laminated plate S2 in the tooth width direction. In this way, the stator winding 102 forms a ventilation gap 400 at the non-overlapping position.

In an embodiment, the slot width of the first slot part 201ca is different from the slot width of the second slot part 201cb. In the stacking direction, the first slot part 201ca of the first laminated plate S1 corresponds to the second slot part 201cb of the second laminated plate S2. In the orthographic projection along the stacking direction, the projection region of a slot part with a smaller slot width is located in the projection region of a slot part with a larger slot width. In this way, when the first tooth part 201b' of the first laminated plate S1 and the first tooth part 201b' of the second laminated plate S2 are staggered along the tooth width direction, a slot part with a smaller slot width in the first slot part 201ca and the second slot part 201cb is not obstructed, and an assembly space of the stator winding 102 can be ensured. In this case, the slot part with the smaller slot width in the first slot part 201ca and the second slot part 201cb is used to assemble the stator winding 102.

In the embodiment shown in FIG. 31, the slot parts 201c includes multiple first slot parts 201ca and multiple second slot parts 201cb. The multiple first slot parts 201ca and the multiple second slot parts 201cb are alternately arranged. Each first slot part 201ca is adjacent to a second slot part 201cb, and the slot width of the first slot part 201ca is larger than the slot width of the second slot part 201cb. The second slot part 201cb is used to assemble the stator winding 102.

In the embodiment shown in and FIG. 30, multiple laminated plates 201 include multiple first laminated plates S1 and multiple second laminated plates S2. The multiple first laminated plates S1 and the multiple second laminated plates S2 are alternately arranged, with each first laminated plate S1 adjacent to a second laminated plate S2, which makes the axial airduct 302 penetrates through along the stacking direction.

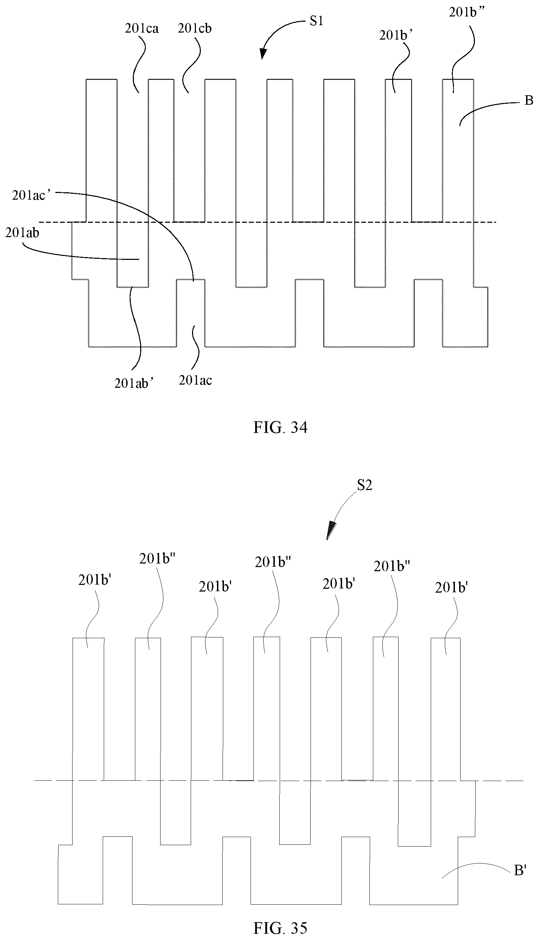

Refer to FIGs. 33 to 35. FIG. 33 is a schematic diagram of a lamination stack 200. FIG. 34 is a schematic diagram of a first surface of the first laminated plate S1 in FIG. 33. FIG. 35 is a schematic diagram of a second surface of the second laminated plate S2 in FIG. 33. The first laminated plate S1 and the second laminated plate S2 in the lamination stack 200 are identical laminated plates.

The laminated plate 201 includes a yoke part 201a and multiple tooth parts 201b connected to the yoke part 201a. A gap between two adjacent tooth parts 201b forms a slot part 201c, such that multiple slot parts 201c are formed. The multiple slot parts 201c include a first slot part 201ca and a second slot part 201cb. The yoke part 201a includes a first slot 201ab and a second slot 201ac that penetrate through along the thickness direction and extend along the radial direction of the stator core 100. One end of the first slot 201ab is connected to the first slot part 201ca, and the other end stops at the yoke part 201a forming a first stopping end 201ab'. One end of the second slot 201ac is connected to the cavity 10a, and the other end stops at the yoke part 201a forming a second stopping end 201ac'. Along the radial direction of the stator core 100, the second stopping end 201ac' is closer to the tooth part 201b than the first stopping end 201ab'. The formation method of the first axial airduct 302a is basically similar to the formation method of the first axial airduct 302a shown in FIG. 30, which is not repeated here.

In an embodiment, the laminated plate 201 includes a first surface B and a second surface B' opposite to each other along the thickness direction. The first surface B of the first laminated plate S 1 is in contact with the second surface B' of the second laminated plate S2, and in the stacking direction, the first laminated plate S 1 is offset with the second laminated plate S2 by at least one tooth part 201b along the circumferential direction of the stator core 100. In this embodiment, another stacking method for multiple identical laminated plates 201 is provided, which makes the stacking methods more diverse, thereby making the stacking structure of lamination stack 200 more diverse to meet the usage needs in different application scenarios.

Refer to FIG. 34. In an embodiment, multiple tooth parts 201b include a first tooth part 201b' and a second tooth part 201b". The tooth width of the first tooth part 201b' is not equal to the tooth width of the second tooth part 201b". The first tooth part 201b' of the first laminated plate S1 is stacked with the second tooth part 201b" of the second laminated plate S2, in the orthographic projection along the stacking direction, the projection region of a tooth part with a smaller tooth width is located within the projection region of a tooth part with a larger tooth width in the tooth width direction. In this way, it is ensured that by a tooth part with a smaller tooth width and the stator winding 102, the ventilation gap 400 can be formed on at least one side. For example, a tooth part with a smaller tooth width aligns with a tooth part with a larger tooth width on one side in the tooth width direction, and by the tooth part with the smaller tooth width and the stator winding 102, a ventilation gap 400 is formed on one side in the tooth width direction. Alternatively, a tooth part with a smaller tooth width aligns with a tooth part with a larger tooth width along the width-wise centerline of the tooth, such that ventilation gaps 400 are widthwise formed between the tooth part with the smaller tooth width and the stator winding 102 on both sides.

In an embodiment, the slot width of the first slot part 201ca is equal to the slot width of the second slot part 201cb, and the first slot part 201ca of the first laminated plate S1 is stacked with the second slot part 201cb of the second laminated plate S2. The stator winding 102 is assembled in the stator slot 100c formed by stacking the first slot part 201ca and the second slot part 201cb.

In the embodiments shown in FIGs. 33 and 35, the laminated plates 201 includes multiple first laminated plates S1 and multiple second laminated plates S2. The multiple first laminated plates S1 and the multiple second laminated plates S2 are alternately arranged. A first tooth part 201b' of a first laminated plate S1 is stacked with a second tooth part 201b" of a second laminated plate S2, and the first laminated plate S1 is offset with the second laminated plate S2 by a tooth part 201b along the circumferential direction of the stator core 100. The multiple first laminated plates S1 and the multiple second laminated plates S2 being alternately arranged means that each first laminated plate S1 is adjacent to a second laminated plate S2.

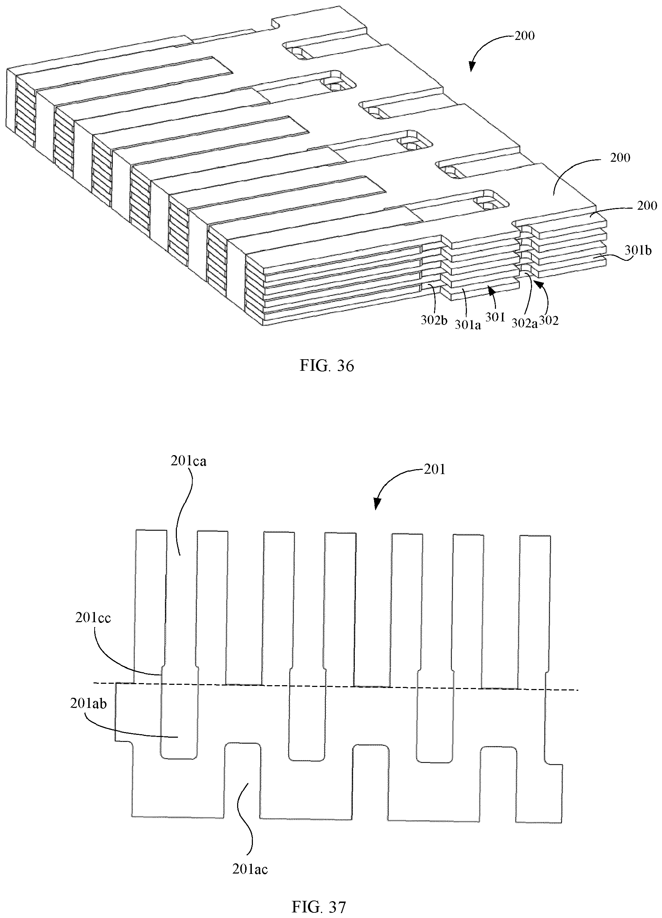

Refer to FIGs. 36 to 37. FIG. 36 is a schematic diagram of a lamination stack 200. FIG. 37 is a schematic diagram of the laminated plate 201 shown in FIG. 36. The laminated plates 201 are identical laminated plates.

In an embodiment, the cooling airduct 300 includes a second axial airduct 302b extending along the axial direction of the stator core 100. The first axial airduct 302a and the second axial airduct 302b are spaced along the radial direction of the stator core 100. The first axial airduct 302a is connected to the radial airduct 301 and the cavity 10a, and the second axial airduct 302b is connected to the ventilation gap 400 and the radial airduct 301. The first axial airduct 302a and the second axial airduct 302b increase the number of axial airducts of the stator core 100, and correspondingly increase an axial ventilation amount, which enables the cooling medium A to be fully mixed in the cooling airduct 300. The axial airduct 302 includes the first axial airduct 302a and the second axial airduct 302b.

In an embodiment, one end of the first slot part 201ca connected to the first slot 201ab includes an expansion 201cc. A dimension of the expansion 201cc is greater than a dimension of the stator winding 102 in the tooth width direction. A gap between the expansion 201cc and the stator winding 102 forms the second axial airduct 302b. The structure of the expansion 201cc is not limited and can be selected according to actual needs. In this embodiment, the expansion 201cc is a strip hole that connects the first slot part 201ca and the first slot 201ab.

Refer to FIGs. 31 and 36. The radial airduct 301 includes a winding side radial section 301a and a cavity side radial section 301b. The winding side radial section 301a is connected to the first axial airduct 302a and the second axial airduct 302b, and the cavity side radial section 301b is connected to the first axial airduct 302a and the cavity 10a at the hollow region of the stator core 100, and the second axial airduct 302b is connected to the ventilation gap 400. In this embodiment, the winding side radial section 301a and the cavity side radial section 301b achieve segmented connection of the radial airduct 301, which is conducive to the setting and connection of the first axial airduct 302a and the second axial airduct 302b.

In an embodiment, the first slot 201ab of the first laminated plate S1 forms a space on one side of the yoke part 201 of the second laminated plate S2a facing the first laminated plate S1, and the space connects the first axial airduct 302a and the second axial airduct 302b. A channel of the space connecting the first axial airduct and the second axial airduct forms the winding side radial section 301a.

In an embodiment, the second slot 201cb of the first laminated plate S1 forms a space on one side of the yoke part 201a of the second laminated plate S2 facing the first laminated plate S1, and the space connects the first axial airduct 302a and the cavity 10a. A channel of the space connecting the first axial airduct 302a and the cavity 10a forms the cavity side radial section 301b.

The winding side radial section 301a is formed through the first slot 201ab, which is simple in formation and easy to achieve the connection between the first axial airduct 302a and the second axial airduct 302b. The cavity side radial section 301b is formed through the second slot part 201cb, which is simple in formation and easy to achieve the connection between the first axial airduct 302a and the cavity 10a. The formation method of the winding side radial section 301a shown in FIG. 30 is basically the same as the formation method of the winding side radial section 301a shown in FIG. 36, and the formation method of the cavity side radial section 301b shown in FIG. 30 is basically the same as the formation method of the cavity side radial section 301b shown in FIG. 36.

The present disclosure does not limit the structure of the first slot 201ab. In the embodiments shown in FIGs. 31 and 34, the first slot 201ab is provided on a part of the yoke part 201a radially opposite to the slot part 201c, and the yoke part 201a forms a hole that penetrates through along the slot width direction at the first slot 201ab. For example, the width of the first slot 201ab can be equal to or unequal to the width of the first slot part 201ca. In this embodiment, the width of the first slot 201ab can be equal to the width of the first slot part 201ca, which can make the flow area of the winding side radial section 301a greater than the flow area of the ventilation gap 400 in the lamination stack 200. According to the above description, a protruding structure 301aa for turbulence can be provided on the inner wall of the winding side radial section 301a, which is not repeated here.

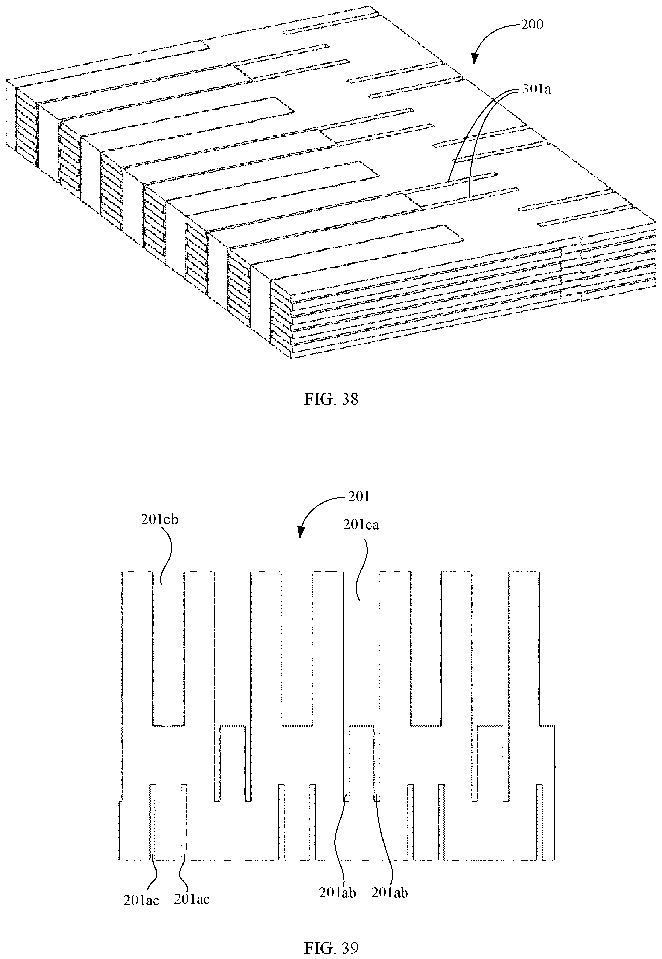

Refer to FIGs. 38 and 39. FIG. 38 is a schematic diagram of a lamination stack 200. FIG. 39 is a schematic diagram of the laminated plate 201 of the lamination stack 200 shown in FIG. 38. Laminated plates 201 of the lamination stack 200 are identical laminated plates.

In an embodiment, a first slot 201ab can also be provided on at least one side of the first slot part 201ca in the slot width direction. One end of the first slot 201ab is connected to the first slot part 201ca, and the other end stops at the yoke part 201a. The slot width of the first slot 201ab is smaller than the slot width of the first slot part 201ca to form a strip gap. Correspondingly, the second slot 201ac can be provided on at least one side of the second slot part 210cb in the slot width direction. One end of the second slot 201ac is connected to the cavity 10a, and the other end stops at the yoke part 201a, and the slot width of the second slot 201ac is smaller than the slot width of the second slot part 210cb. In this way, the dimension of the first slot 201ab in the tooth width direction decreases, which increases the structural strength of the laminated plate 201. In addition, this setting can reduce the flow area of the single winding side radial section 301a, to reduce the difference between the flow area of the winding side radial section 301a and the flow area of the ventilation gap 400, which increases the flow rate of the cooling medium A in the winding side radial section 301a, and ensures heat transfer efficiency.

In the embodiment shown in FIG. 39, first slots 201ab are provided on both sides of the first slot part 201ca in the slot width direction, and second slots 201ac are provided on both sides of the second slot 210cb in the slot width direction. The slot width of a single first slot 201ab is smaller than the slot width of the first slot part 201ca, and the slot width of a single second slot 201ac is smaller than the slot width of the second slot part 210cb. The first slot 201ab and the second slot 201ac both form strip gaps.

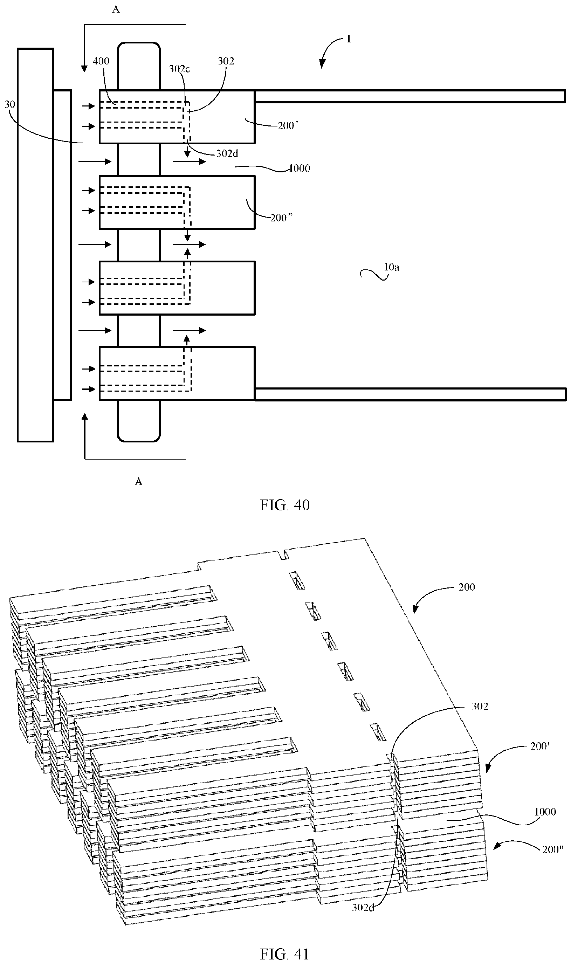

Refer to FIG. 40, which is a semi-sectional view of generator 1.

In an embodiment, the cooling airduct 300 includes a first connection part 302c and a second connection part 302d, where the first connection part 302c is connected to the ventilation gap 400, and the second connection part 302d is connected to the cavity 10a at the hollow region of the stator core 100, which enables the cooling medium A to flow between the ventilation gap 400 and the cavity 10a. One of the first connection part 302c and the second connection part 302d is an air inlet, and the other one is an air outlet. The first connection part 302c and the second connection part 302d are at least partially staggered. The term "at least partially staggered" here means that the first connection part 302c and the second connection part 302d are not directly opposite to each other and can be partially or completely staggered. In this way, when the cooling medium A flows from the first connection part 302c to the second connection part 302d, the cooling medium A collides with the inner wall of the cooling airduct 300, which serves as a role a turbulator, enabling the cooling medium A to flow and mix more fully, which is conducive to strengthening the heat transfer effect of the stator core 100.

In an embodiment, the cooling airduct 300 includes an axial airduct 302 extending along the axial direction of the stator core 100. Along the radial direction of the stator core 100, one side of the axial airduct 302 is provided with a ventilation gap 400, and the other side is provided with a cavity 10a. The axial airduct 302 connects the ventilation gap 400 and the cavity 10a. The axial airduct 302 is provided with the first connection part 302c and the second connection part 302d. A connection part between the axial airduct 302 and the ventilation gap 400 forms the first connection part 302c, and a connection part between the axial airduct 302 and the cavity 10a forms the second connection part 302d. The first connection part 302c and the second connection part 302d are at least partially staggered along the axial direction of the stator core 100. In this embodiment, the first connection part 302c and the second connection part 302d are staggered along the axial direction of the stator core 100 and at different heights, which enables the cooling medium A to fully mix and flow along the extension direction of the axial airduct 302, improving the cooling effect of the stator core 100 at the axial airduct 302.

Refer to FIGs. 40 and 41. FIG 41 is a schematic diagram of a partial lamination stack 200 in a stator core 100.

In an embodiment, the stator core 100 includes a radially extended airduct 1000 extending along the radial direction of the stator core 100 and multiple lamination stacks 200. The multiple lamination stacks 200 include a first lamination stack 200' and a second lamination stack 200" arranged along the axial direction of the stator core 100. An axial gap between the first lamination stack 200' and the second lamination stack 200" forms the radially extended airduct 1000. One end of the radially extended airduct 1000 is configured to directly connect the airgap 30, and the other end is connected to the cavity 10a. The first lamination stack 200' is provided with an axial airduct 302. The axial airduct 302 penetrates through the first lamination stack 200' and is connected to the cavity 10a through the radially extended airduct 1000. A connection part between the axial airduct 302 and the radially extended airduct 1000 forms the second connection part 302d. The radially extended airduct 1000 is a low-pressure region compared to the axial airduct 302. The second connection part 302d is provided at a position where the axial airduct 302 is connected to the radially extended airduct 1000, which can reduce the flow resistance of the cooling medium A, improve the fluidity of the cooling medium A, and improve the heat transfer efficiency of the cooling medium A.

In an embodiment, the axial airduct 302 can penetrate both ends of the first lamination stack 200' along the axial direction of the stator core 100, and be connected to the radially extended airducts 1000 arranged at both ends of the first lamination stack 200'. Therefore, the two ends of the axial airduct 302 form second connection parts 302d, and the cooling medium A entering the axial airduct 302 can fully flow along the extension direction of the axial airduct 302, thereby further increasing the effective heat dissipation area and achieving sufficient heat dissipation.

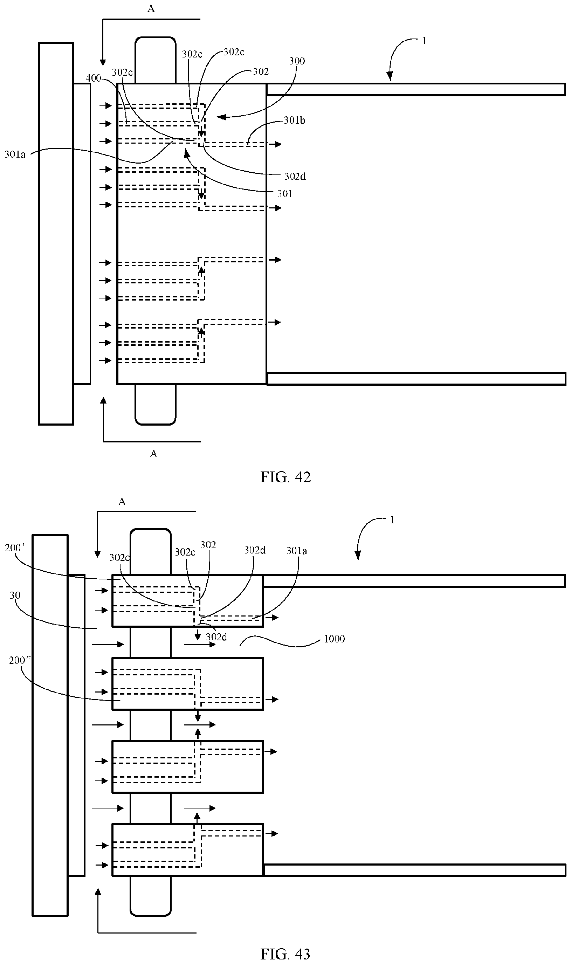

Refer to FIG. 42, which is a semi-sectional view of generator 1.

The cooling airduct 300 includes a radial airduct 301 extending along the radial direction of the stator core 100 and an axial airduct 302 extending along the axial direction of the stator core 100. The radial airduct 301 is connected to the axial airduct 302 and is connected to the ventilation gap 400 and the cavity 10a. In an embodiment, the radial airduct 301 includes a cavity side radial section 301b that extends along the radial direction of the stator core 100. The cavity side radial section 301b is between the axial airduct 302 and the cavity 10a, and is connected to the axial airduct 302 and the cavity 10a. A connection part between the axial airduct 302 and the cavity side radial section 301b forms the second connection part 302d. Moreover, the axial airduct 302 is between the ventilation gap 400 and the cavity side radial section 301b, and is connected to the ventilation gap 400 and the cavity side radial section 301b. A connection part between the axial airduct 302 and the ventilation gap 400 forms the first connection part 302c, and the first connection part 302c and the second connection part 302d are at least partially staggered along the axial direction of the stator core 100. In this embodiment, the first connection part 302c and the second connection part 302d are staggered along the axial direction of the stator core 100, increasing an axial distance between the first connection part 302c and the second connection part 302d, which enables the cooling medium A to fully mix and flow along the extension direction of the axial airduct 302, improving the cooling effect of the stator core 100. In addition, the cavity side radial section 301b is formed inside the stator core 100. When the cooling medium A flows from the second connection part 302d to the cavity 10a, the cooling medium A always flows inside the stator core 100, which makes the contact between the cooling medium A and the stator core 100 good, and the heat exchange more direct and efficient.

In an embodiment, the radial airduct 301 includes a winding side radial section 301a extending radially along the stator core 100, the axial airduct 302 is between the winding side radial section 301a and the cavity side radial section 301b, the axial airduct 302 is connected to the winding side radial section 301a and the cavity side radial section 301b, and the winding side radial section 301a is connected to the ventilation gap 400 and the axial airduct 302. The first connection part 302c is formed between the axial airduct 302 and the winding side radial section 301a. The winding side radial section 301a realizes the connection between the ventilation gap 400 and the axial airduct 302, ensuring the circulation of the cooling medium A between the ventilation gap 400 and the cavity 10a. The setting method of the winding side radial section 301a in FIG. 42 is basically similar to the setting method of the winding side radial section 301a mentioned above, and is not repeated here.

Refer to FIG. 43, which is a semi-sectional view of generator 1.

The axial airduct 302 can be connected to the cavity side radial section 301b and the radially extended airduct 1000, to form second connection parts 302d at different positions. For example, the first lamination stack 200' is provided with an axial airduct 302. One end of the axial airduct 302 penetrates through the first lamination stack 200' and is connected to the radially extended airduct 1000. A connection part between the axial airduct 302 and the radially extended airduct 1000 forms the second connection part 302d. Moreover, the axial airduct 302 is further connected to the cavity side radial section 301b, forming the second connection part 302d. In this embodiment, the second connection part 302d can be connected to the radially extended airduct 1000 and the cavity side radial section 301b. A part of the cooling medium A can flow to the cavity 10a through the cavity side radial section 301b, and the other part of the cooling medium A can flow to the cavity 10a along the radially extended airduct 1000. Since the radially extended airduct 1000 is a low-pressure region, a good diversion effect can be provided, thereby reducing flow resistance. Therefore, it is more conducive for the cooling medium A in the axial airduct 302 to flow towards an end of the axial airduct 302, achieving full mixing of the cooling medium A in the axial airduct 302, accelerating the circulation of the cooling medium A and improving cooling efficiency.

In an embodiment, the first connection part 302c is an air inlet, the second connection part 302d is an air outlet, and the second connection part 302d is located at one end of the axial airduct 302 close to the radially extended airduct 1000. In this way, on the one hand, it is beneficial for the cooling medium A to fully circulate in the axial airduct 302. On the other hand, the radially extended airduct 1000 is a low-pressure region, and when the cooling medium A flows to a side where the radially extended airduct 1000 is located, the flow resistance is small, and the circulation flow is good.

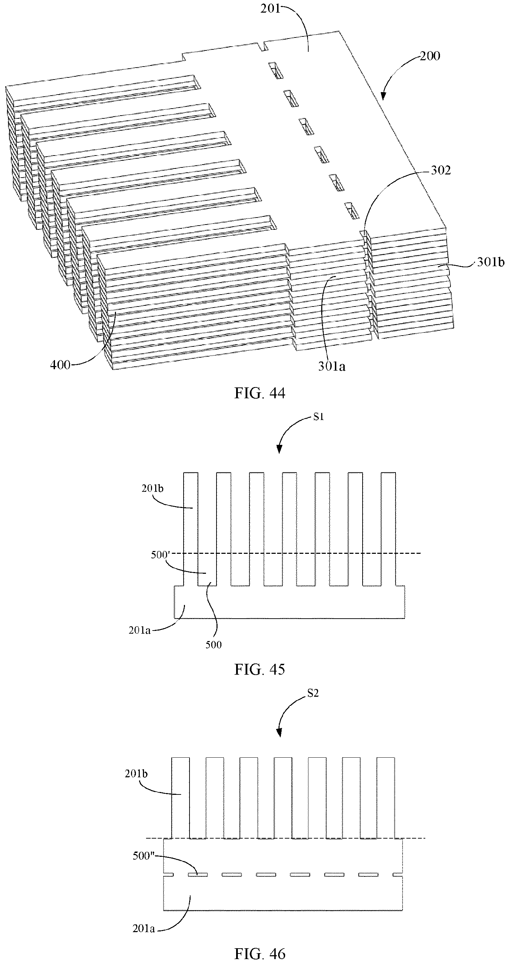

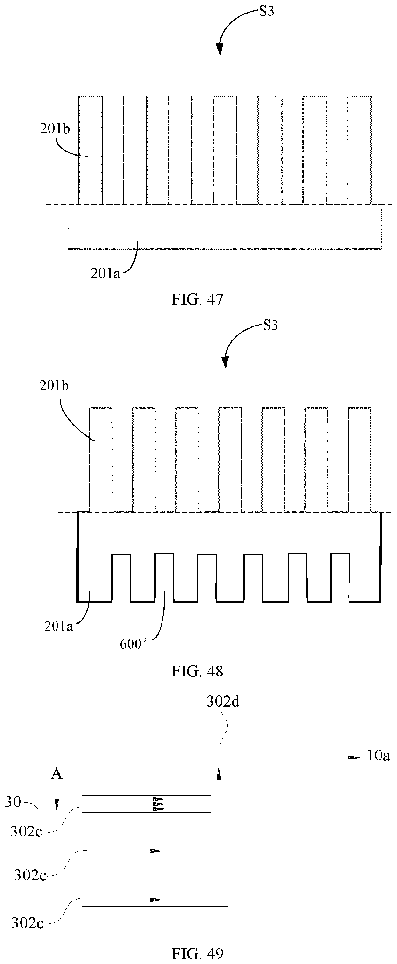

Refer to FIGs. 44 to 47. FIG. 44 is a schematic diagram of a lamination stack 200 according to an embodiment of the present disclosure. FIG. 45 is a schematic diagram of a first laminated plate S1 in the lamination stack 200 shown in FIG. 44. FIG. 46 is a schematic diagram of a second laminated plate S2 in the lamination stack 200 shown in FIG. 44. FIG. 47 is a schematic diagram of a third laminated plate S3 in the lamination stack 200 shown in FIG. 44.

The formation method of the axial airduct 302 is not limited. In an embodiment, multiple laminated plates 201 include a first laminated plate S1 and a second laminated plate S2, where at least one of the yoke part 201a of the first laminated plate S1 and the yoke part 201a of the second laminated plate is provided with a notch 500 that penetrates through along the thickness direction, forming the axial airduct 302. The formation of the axial airduct 302 is simple.

In an embodiment, refer to FIGs. 45 and 46. Along the radial direction of the stator core 100, the dimension of the yoke part 201a of the first laminated plate S1 is equal to the dimension of the yoke part 201a of the second laminated plate S2. The notch 500 includes a first notch 500' and a second notch 500". The yoke part 201a of the first laminated plate S1 is provided with the first notch 500', and the yoke part 201a of the second laminated plate S2 is provided with the second notch 500", and in the stacking direction, the first notch 500' partially overlaps with the second notch 500", forming an axial airduct 302. In this embodiment, the radial dimension of the yoke part 201a of the first laminated plate S1 is equal to the radial dimension of the yoke part 201a of the second laminated plate S2. By setting different shapes and dimensions of the first notch 500' and the second notch 500", the cross-sectional shape and dimensions of the axial airduct 302 can be changed, achieving diversification of the axial airduct 302 structure and enhancing a local turbulence level of the axial airduct 302.

A corner at a bottom of the first notch 500' can be set with a rounded corner, and a corner at a bottom of the second notch 500" can be set with a rounded corner, as shown in FIG. 25 and related descriptions. In addition, the lamination stack 200 can further be provided with a fixing component and a radial tensing component. The radial tensing component can refer to FIG. 13 and related descriptions, and the fixing component can refer to FIG. 26 and related descriptions, which is not repeated here. In addition, the providing manner of the first notch 500' can further be as shown in FIG. 19.

The formation method of the cavity side radial section 301b is not limited. In an embodiment, the multiple laminated plates 201 include a third laminated plate S3. The third laminated plate S3 is stacked between the first laminated plate S1 and the second laminated plate S2. A dimension of a yoke part 201a of the third laminated plate S3 along the radial direction of the stator core 100 is smaller than the dimensions of the yoke part 201a of the first laminated plate S1 and the yoke part 201a of the second laminated plate S2 in this direction. A gap is formed between the yoke part 201a of the first laminated plate S1 and the yoke part 201a of the second laminated plate S2. The gap connects the axial airduct 302 and the cavity 10a. A channel of the gap connecting the axial airduct 302 and the cavity 10a forms the cavity side radial section 301b. This setting can enable the cavity side radial sections 301b to be interconnected circumferentially along the stator core 100, thereby increasing the flow area of the cavity side radial airduct 301b in the circumferential direction.

Refer to FIG. 48, which is a schematic diagram of a third laminated plate S3 in the lamination stack shown in FIG. 44 according to an embodiment.

In an embodiment, the multiple laminated plates 201 include a third laminated plate S3, and the dimension of the yoke part 201a of the third laminated plate S3 along the radial direction of the stator core 100 is equal to the dimensions of the yoke part 201a of the first laminated plate S1 and the yoke part 201a of the second laminated plate S2 in this direction. The yoke part 201a of the third laminated plate S3 can be provided with a cavity connection notch 600'. One end of the cavity connection notch 600' is connected to the cavity 10a, and the other end stops at the yoke part 201a of the third laminated plate S3. The cavity connection notch 600' connects the axial airduct 302 and the cavity 10a, and a channel of the cavity connection notch 600' connecting the axial airduct 302 and the cavity 10a forms the cavity side radial section 301b.

In an embodiment, the number of the first connection parts 302c may be greater than the number of the second connection parts 302d to facilitate at least partially staggering between the first connection parts 302c and the second connection parts 302d, which enables more cooling medium A to flow fully along the axial airduct 302. For example, by setting a smaller number of third laminated plates S3, the number of third laminated plates S3 can be reduced compared to the number of first laminated plates S1 and the number of second laminated plates S2, to reduce the number of the cavity side radial sections 301b, thereby reducing the number of the second connection parts 302d.

In addition, in order to avoid a significant difference between a total flow area of the first connection parts 302c and a total flow area of the second connection parts 302d, the flow area of a single second connection part 302d can be greater than the flow area of a single first connection part 302c. For example, a thickness of the third laminated plate S3 can be increased to increase the flow area of a single second connection part 302d. Alternatively, the number of the third laminated plates S3 can be increased to increase the flow area of a single second connection part 302d.

In the embodiments shown in FIGs. 41 and 44, there can be multiple axial airducts 302 arranged along the circumferential direction of the stator core 100 and connected to each other, so that the cooling medium A can be fully mixed in the multiple axial airducts 302. In an embodiment, a dimension of the yoke part 201a of the third laminated plate S3 along the radial direction of the stator core 100 is smaller than the dimensions of the yoke part 201a of the first laminated plate S 1 and the yoke part 201a of the second laminated plate S2 in this direction. In the orthographic projection along the stacking direction, the projection of the axial airduct 302 is located outside the projection region of the yoke 201b of the third laminated plate S3, thus realizing the connection of multiple axial airducts 302.

In some embodiments, the second connection part 302d may be provided at an end of the axial airduct 302. For example, the second connection part 302d can be set at one end of the axial airduct 302 that is opposite to the flow direction of the cooling medium A, or the second connection part 302d can also be set at one end of the axial airduct 302 that is the same as the flow direction of the cooling medium A.

Refer to FIG. 49, which is a schematic diagram of a flow direction of cooling medium A from an airgap to a cavity.

In the embodiment shown in FIG. 49, the cooling medium A flows into the airgap 30 along the axial direction of the stator core 100 from one end and flows through the first connection part 302c to the second connection part 302d. There are multiple first connection parts 302c arranged along the flow direction of the cooling medium A in the airgap 30, and are parallelly distributed at an end of the axial airduct 302 that is in the same direction as the flow direction of the cooling medium A, and the second connection part 302d is set at an end of the axial airduct 302 opposite to the flow direction of the cooling medium A, which enables the first connection part 302c and the second connection part 302d to be staggered in the axial direction. Moreover, a larger amount of cooling medium A can flow into the first connection part 302c closest to the second connection part 302d, and a relatively small amount of cooling medium A flow into the remaining first connection parts 302c, which can effectively alleviate local hotspot of high temperature.

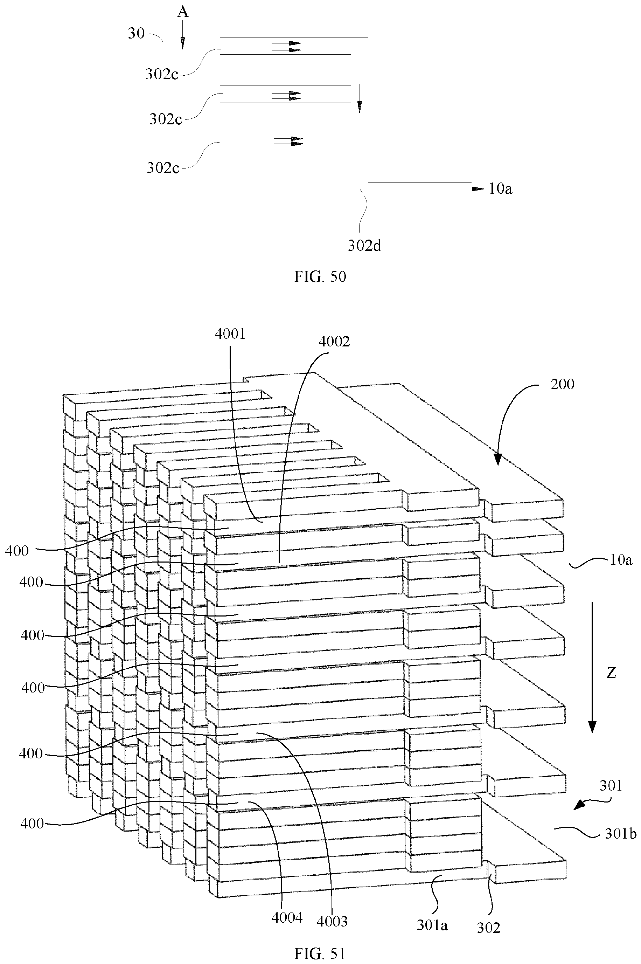

Refer to FIG. 50, which is a schematic diagram of a flow direction of cooling medium A from an airgap to a cavity.

In the embodiment shown in FIG. 50, the cooling medium A flows into the airgap 30 along the axial direction of the stator core 100 from one end and flows through the first connection part 302c to the second connection part 302d. There are multiple first connection parts 302c arranged along the flow direction of the cooling medium A in the airgap 30, and are parallelly distributed at an end of the axial airduct 302 that is opposite to the flow direction of the cooling medium A, and the second connection part 302d is set at an end of the axial airduct 302 that is in the same direction as the flow direction of the cooling medium A, which enables the first connection part 302c and the second connection part 302d to be staggered in the axial direction. Moreover, the flow rate of the cooling medium A at multiple first connection parts 302c is relatively balanced, thereby enhancing the uniformity of flow in each radial section arranged in the axial direction, ensuring that the stator parts adjacent to each radial section are evenly cooled, and helping to reduce the overall flow resistance in the generator 1.

Since the heat dissipation paths of components in the generator 1 are different, a temperature gradient will be formed in space, especially in the axial direction of stator core 100. A temperature at an axial end of a stator winding 102 is higher than a temperature in an axial mid part, resulting in the stator 10 of the generator including high-temperature and low-temperature regions with different temperatures. Therefore, in the present disclosure, a ventilation area of a ventilation gap 400 in the high-temperature region is greater than a ventilation area of a ventilation gap 400 in the low-temperature region, such that a heat dissipation area of the generator stator 10 in the high-temperature region is greater than a heat dissipation area of the generator stator 10 in the low-temperature region. In this way, the flow rate of the cooling medium A flowing through the high-temperature region can be increased to enhance the heat transfer effect and achieve the effect of weakening local hotspot of high temperature.

In an embodiment, the density of the ventilation gap 400 in the high-temperature region is greater than the density of the ventilation gap 400 in the low-temperature region. That is to say, a larger number of ventilation gaps 400 can be set in the high-temperature region, so that the flow area of the cooling medium A in the high-temperature region is greater than the flow area of cooling medium A in the low-temperature region, which makes the high-temperature region and the temperature rise in the low-temperature region relatively close, achieving the purpose of reducing local high temperature rise.

Refer to FIG. 51, which is a schematic diagram of a partial structure of a stator core 100.

The stator core 100 includes multiple ventilation gaps 400. The ventilation gaps 400 include a first ventilation gap 4001 and a second ventilation gap 4002 formed in the high-temperature region. The first ventilation gap 4001 and the second ventilation gap 4002 are arranged along the axial direction of the stator core 100 and adjacent to each other. The ventilation gaps 400 include a third ventilation gap 4003 and a fourth ventilation gap 4004 formed in the low-temperature region. The third ventilation gap 4003 and the fourth ventilation gap 4004 are arranged along the axial direction of the stator core 100 and adj acent to each other. An axial distance between the first ventilation gap 4001 and the second ventilation gap 4002 is less than an axial distance between the third ventilation gap 4003 and the fourth ventilation gap 4004. In this way, the number of ventilation gaps 400 in the high-temperature region can be increased compared to the number of ventilation gaps 400 in the low-temperature region, thereby increasing the density of ventilation gaps 400 in the high-temperature region compared to the density of ventilation gaps 400 in the low-temperature region, which increases the ventilation area in the high-temperature region, and increases the heat dissipation area of the generator stator 10 in the high-temperature region.

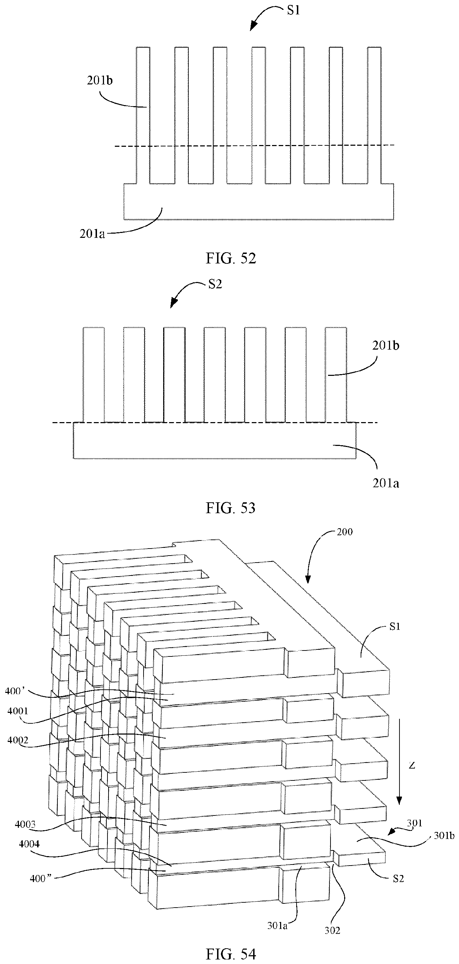

Refer to FIGs. 51, 52, and 53. FIG. 52 is a schematic diagram of a first laminated plate S1 shown in FIG. 51. FIG. 53 is a schematic diagram of a second laminated plate S2 shown in FIG. 51.

The stator core 100 includes a lamination stack 200. The lamination stack 200 has a high-temperature region and a low-temperature region, and the lamination stack 200 is provided with multiple ventilation gaps 400. In the lamination stack 200, the tooth parts 201b of the multiple laminated plates 201 are stacked, and the tooth parts 201b do not completely overlap in the tooth width direction, to form ventilation gaps 400 between the stator winding 102 and the tooth parts 201b adjacent to the stator winding 102 in the tooth width direction. The formation method of the ventilation gap 400 can be referred to in the above description, which is not repeated here.

In an embodiment, the number of laminated plates 201 between the first ventilation gap 4001 and the second ventilation gap 4002 is less than the number of laminated plates 201 between the third ventilation gap 4003 and the fourth ventilation gap 4004, resulting in an axial distance between the first ventilation gap 4001 and the second ventilation gap 4002 being less than an axial distance between the third ventilation gap 4003 and the fourth ventilation gap 4004, such that the density of the ventilation gaps 400 in the high-temperature region is greater than the density of the ventilation gaps 400 in the low-temperature region. In this embodiment, by stacking a smaller number of laminated plates 201 between the first ventilation gap 4001 and the second ventilation gap 4002, and stacking a larger number of laminated plates 201 between the third ventilation gap 4003 and the fourth ventilation gap 4004, the high density of ventilation gaps 400 in the high-temperature region and the low density of ventilation gap 400 in the low-temperature region is achieved. Where the tooth widths of the tooth parts 201b of laminated plates 201 stacked between the first ventilation gap 4001 and the second ventilation gap 4002 can be equal and aligned along the tooth width direction. The tooth widths of the tooth parts 201b of laminated plates 201 stacked between the third ventilation gap 4003 and the fourth ventilation gap 4004 can be equal and aligned along the tooth width direction.

In the embodiment shown in FIG. 51, the high-temperature region and low-temperature region are distributed along the axial direction (Z direction in the drawing) of the stator core 100. From the high-temperature region to the low-temperature region, the number of laminated plates 201 between adjacent ventilation gaps 400 gradually increases. For example, from the high-temperature region to the low-temperature region, the number of laminated plates 201 between adjacent ventilation gaps 400 increases from ten to twenty, which is not limited.

In an embodiment, the ventilation area of a single ventilation gap 400 in the high-temperature region can be equal to the ventilation area of a single ventilation gap 400 in the low-temperature region, and the number of ventilation gaps 400 in the high-temperature region is larger, and the number of ventilation gaps 400 in the low-temperature region is smaller, which achieves the purpose of larger ventilation area in the high-temperature region and smaller ventilation area in the low-temperature region. The stator winding 102 and laminated plates 201 with equal thickness can achieve equal ventilation area for a single ventilation gap 400. The thickness of laminated plates 201 is equal, which can reduce different dimensions of laminated plates 201, facilitate the processing and manufacturing of laminated plates 201, and reduce the risk of misuse of laminated plates during the stacking process.

In the embodiment shown in FIG. 51, the ventilation areas of the first ventilation gap 4001, the second ventilation gap 4002, the third ventilation gap 4003, and the fourth ventilation gap 4004 are equal. The first ventilation gap 4001, the second ventilation gap 4002, the third ventilation gap 4003, and the fourth ventilation gap 4004 can be respectively formed by the stator winding 102 and one or more first laminated plates S 1 with equal quantity and thicknesses, and the number of first laminated plates S 1 is not limited. In an embodiment, one or more first laminated plates S 1 with equal quantity and thicknesses can be pre-stacked into a pre-assembled lamination stack, and by the stator winding 102 and four pre-assembled lamination stacks, the first ventilation gap 4001, the second ventilation gap 4002, the third ventilation gap 4003, and the fourth ventilation gap 4004 can be respectively formed, thereby achieving equal ventilation areas for the first ventilation gap 4001, the second ventilation gap 4002, the third ventilation gap 4003, and the fourth ventilation gap 4004.

Refer to FIG. 54. FIG. 54 is a schematic diagram of a lamination stack 200.

In an embodiment, the ventilation area of each ventilation gap 400 in the high-temperature and low-temperature regions can be set to be different. For example, the multiple laminated plates 201 include a first laminated plate S 1 stacked in the high-temperature region and a second laminated plate S2 stacked in the low-temperature region. A ventilation gap 400' is formed by the stator winding 102 and the tooth part 201b of the first laminated plate S 1, and a ventilation gap 400" is formed by the stator winding 102 and the tooth part 201b of the second laminated plate S2, where the thickness of the tooth part 201b of the first laminated plate S 1 is greater than the thickness of the tooth part 201b of the second laminated plate S2. In this way, the ventilation area of the ventilation gap 400' formed between the stator winding 102 and the tooth part 201b of the first laminated plate S 1 is greater than the ventilation area of the ventilation gap 400" formed between the stator winding 102 and the tooth part 201b of the second laminated plate S2. In this embodiment, by setting different thicknesses of laminated plates 201 in the high-temperature and low-temperature regions, a large ventilation area in the high-temperature region and a small ventilation area in the low-temperature region can be achieved, which is simple and easy to implement.

In the embodiment shown in FIG. 54, the ventilation gaps 400 include a first ventilation gap 4001 and a second ventilation gap 4002 formed in the high-temperature region. The first ventilation gap 4001 and the second ventilation gap 4002 are arranged along the axial direction of the stator core 100 and adjacent to each other. The ventilation gaps 400 include a third ventilation gap 4003 and a fourth ventilation gap 4004 formed in the low-temperature region. The third ventilation gap 4003 and the fourth ventilation gap 4004 are arranged along the axial direction of the stator core 100 and adjacent to each other. The thickness of the tooth part 201b between the first ventilation gap 4001 and the second ventilation gap 4002 is less than the thickness of the tooth part 201b between the third ventilation gap 4003 and the fourth ventilation gap 4004, resulting in a small axial distance between the first ventilation gap 4001 and the second ventilation gap 4002, and a large axial distance between the third ventilation gap 4003 and the fourth ventilation gap 4004, which can make the density of ventilation gaps 400 in the low-temperature region smaller than the density of ventilation gaps 400 in the high-temperature region. In this embodiment, the ventilation gaps 400 in the high-temperature region have a large and high-density ventilation area, and the ventilation gaps 400 in the low-temperature region have a small and low-density ventilation area, which is beneficial for reducing the temperature difference between the high-temperature and low-temperature regions.

In an embodiment, the high and low-temperature regions are distributed along the axial direction (Z-direction in FIG. 54) of the stator core 100. From the high-temperature region to the low-temperature region, a thickness of a laminated plate 201 between adjacent ventilation gaps 400 sequentially increases, such that the density of the ventilation gaps 400 sequentially decreases from the high-temperature region to the low-temperature region. In another embodiment, a thickness of each tooth part 201b forming a ventilation gap 400 with the stator winding 102 gradually decreases from the high-temperature region to the low-temperature region, such that the ventilation area of each ventilation gap 400 gradually decreases from the high-temperature region to the low-temperature region. In this embodiment, a combination of the above two technical solutions results in a more diversified distribution of ventilation gaps 400 in the high-temperature region and ventilation gaps 400 in the low-temperature region.

In the embodiments shown in FIGs. 51 to 54, the dimension of the yoke part 201a of the first laminated plate S1 along the radial direction of the stator core 100 is greater than the dimension of the yoke part 201a of the second laminated plate S2 in this direction. In other embodiments, the dimension of the yoke part 201a of the first laminated plate S1 along the radial direction of the stator core 100 can be equal to the dimension of the yoke part 201a of the second laminated plate S2 in this direction.

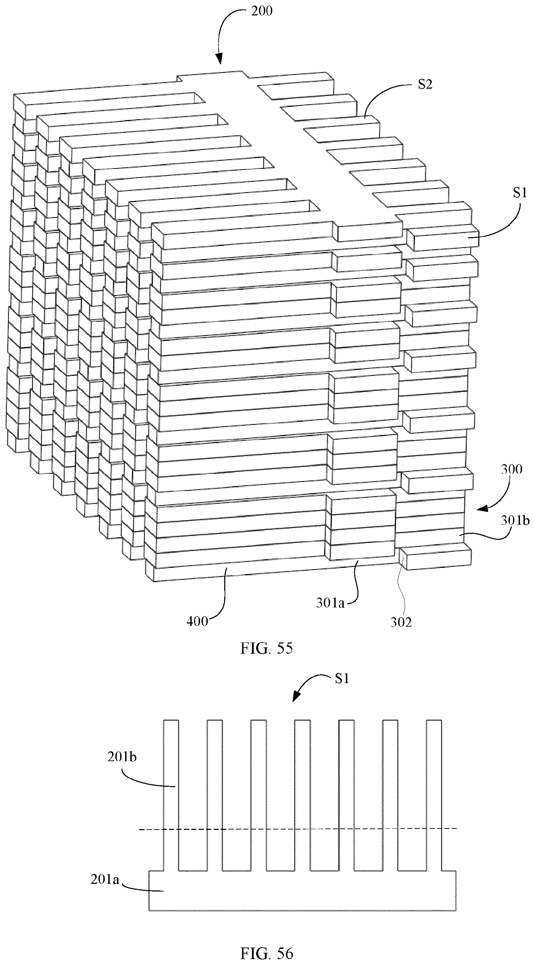

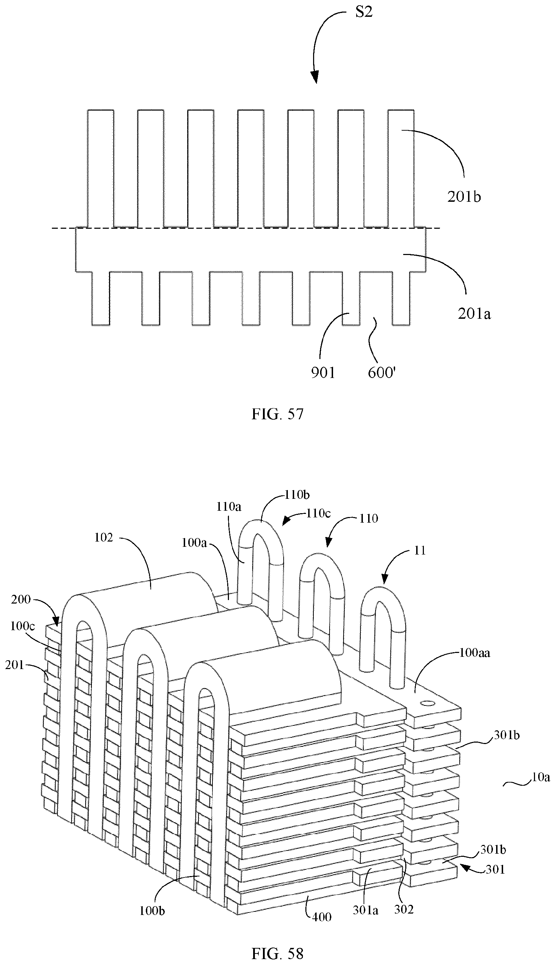

Refer to FIGs. 55 to 57. FIG. 55 is a schematic diagram of a lamination stack 200 according to an embodiment of the present disclosure. FIG. 56 is a schematic diagram of a first laminated plate S1 in the lamination stack 200 shown in FIG. 55. FIG. 57 is a schematic diagram of a second laminated plate S2 in the lamination stack 200 shown in FIG. 55.

In an embodiment, the dimension of the yoke part 201a of the first laminated plate S1 along the radial direction of the stator core 100 is equal to the dimension of the yoke part 201a of the second laminated plate S2 in this direction. A cavity connection notch 600' is provided on the yoke part 201a of the second laminated plate S2. One end of the cavity connection notch 600' is connected to the axial airduct 302 and the other end is connected to the cavity 10a. The channel of the cavity connection notch 600' connecting the axial airduct 302 and cavity 10a can serve as the cavity side radial section 301b.

As shown in FIG. 57, multiple cavity connection notches 600' are provided on the yoke part 201a of the second laminated plate S2, and adjacent cavity connection notches 600' are separated by a partition 901 to form multiple cavity side radial sections 301b. The partition 901 is equivalent to the support structure 900 shown in FIG. 29, achieving an axial support for the yoke part 201a of the first laminated plate S1, and improving the strength of the lamination stack 200.

The implementation method of each ventilation gap 400 in FIG. 55 is basically the same as the implementation method of each ventilation gap 400 in FIG. 51, which is not repeated here.

In the embodiments shown in FIGs. 51, 54, and 55, the lamination stack 200 is provided with a cooling airduct 300. The cooling airduct 300 includes a radial airduct 301 extending along the radial direction of the stator core 100 and an axial airduct 302 extending along the axial direction of the stator core 100. The radial airduct 301 includes a winding side radial section 301a and a cavity side radial section 301b. The winding side radial section 301a is connected to the ventilation gap 400 and the axial airduct 302, and the cavity side radial section 301b is connected to the axial airduct 302 and the cavity 10a. The formation methods of the axial airduct 302, the winding side radial section 301a, and the cavity side radial section 301b can be referred to in the previous description, which is not repeated here.

In an embodiment, the permanent magnet 22 includes a first permanent magnet assembled at the axial end of the rotor core 21 and a second permanent magnet assembled at the axial middle of the rotor core 21, where the grade of the first permanent magnet is lower than the grade of the second permanent magnet. That is to say, the remanence flux and coercive force of the first permanent magnet are respectively smaller than the remanence flux and coercive force of the second permanent magnet. For example, the brand of the first permanent magnet is N35H, and the brand of the second permanent magnet is N45H (with better performance but less economy), which is not limited. When the cooling medium A enters the airgap 30 along both ends of the stator core 100, the temperatures of the cooling medium A in regions at the axial ends are lower, and the temperature of cooling medium A in the axial middle region is higher, resulting in a lower temperature for the first permanent magnet and a higher temperature for the second permanent magnet. Since the temperature coefficients of permanent magnet materials are mostly negative, especially neodymium iron boron permanent magnet materials commonly used in permanent magnet wind turbines, when the first permanent magnet is of a lower grade, it is possible to achieve a magnetic performance of the first permanent magnet is closer or almost identical to a magnetic performance of the second permanent magnet during operation, thereby effectively reducing the cost of permanent magnet materials. On the other hand, when the density of the ventilation gaps 400 at the axial end region of the stator core 100 is larger than the density of the ventilation gaps 400 at the axial middle region (as shown in FIG. 51), a tooth top area of the stator tooth 100b facing the first permanent magnet is also relatively small. If the first permanent magnet is of the same brand as the second permanent magnet, although the airgap magnetic density can be maintained at a larger value, the leakage ratio also increases, and the utilization rate of the permanent magnet is low. Therefore, economic efficiency can be improved by reducing the first permanent magnet grade. The above two aspects are superimposed, and the second factor is more significant. Therefore, by the first permanent magnet brand being lower than the second permanent magnet brand, and the effect is more significant. It should be pointed out that the number of first permanent magnets and second permanent magnets along the axial direction of the stator core 100 can be more than one.

In order to further enhance the cooling effect, the generator stator 10 further includes a liquid cooling system. The liquid cooling system is combined with a circulating air cooling system to enhance the compactness, economy, and reliability of the overall structure of generator 1.

Refer to FIG. 58, which is a schematic diagram of a partial structure of a stator core 100.

The yoke 100a includes multiple fins 100aa distributed along the axial direction of the stator core 100 and spaced from each other. Along the radial direction of the stator core 100, the multiple fins 100aa are formed at one end of the yoke 100a far from the stator teeth 100b. The cooling airduct 300 includes multiple cavity side radial sections 301b extending along the radial direction of the stator core 100 and distributed along the axial direction of the stator core 100. The multiple cavity side radial sections 301b are connected to the ventilation gaps 400 and the cavity 10a, and a gap between adjacent fins 100aa forms the cavity side radial section 301b. The generator stator 10 includes a liquid cooling system 11. The liquid cooling system 11 includes a liquid cooling pipeline 110. The liquid cooling pipeline 110 passes through the fins 100aa and the cavity side radial sections 301b along the axial direction of the stator core 100, and the fins 100aa are configured as the heat exchange fins of the liquid cooling pipeline 110. In this scheme, when the cooling medium A circulates between the airgap 30 and the cavity 10a, the cooling medium A enters multiple cavity side radial sections 301b, directly contacts the liquid cooling pipeline 110 and the fins 100aa, thereby transferring the heat carried to the cooling liquid in the liquid cooling pipeline 110 or directly radiating the heat outward through the fins 100aa. Since the surface area of the fins 100aa is large and the fins 100aa directly contact with the liquid cooling pipeline 110, when the fins 100aa come into contact with the heated cooling medium A, the fins 100aa can absorb more heat and serve as heat exchange fins for the liquid cooling pipeline 110, significantly enhancing the heat exchange effect. In addition, the liquid cooling pipeline 110 provided in the present disclosure is directly installed in the circulation path of the air-cooling system. Compared to a closed air cycle cooling system (where an additional heat exchange device on the flow path of cooling medium A is necessary), a heat exchange device can be omitted, and the liquid cooling pipeline 110 and the stator core 100 themselves serve as heat exchange devices, which makes the cooling system of generator stator 10 more concise and compact. Compared to a traditional arrangement, removing a massive heat exchange device from the cavity 10a greatly alleviates a space congestion inside the cavity 10a and significantly enhances the maintainability of the entire generator stator 10.

In an embodiment, the cooling airduct 300 includes a radial airduct 301 extending along the radial direction of the stator core 100 and an axial airduct 302 extending along the axial direction of the stator core 100. The radial airduct 301 includes a winding side radial section 301a and a cavity side radial section 301b. The winding side radial section 301a is connected to the ventilation gap 400 and the axial airduct 302, and the cavity side radial section 301b is connected to the axial airduct 302 and the cavity 10a, and the cavity side radial section 301b is closer to the cavity 10a than the axial airduct 302 and the winding side radial section 301a. In this way, the fins 100aa and the liquid cooling pipeline 110 are far from the stator winding 102, which can effectively suppress the reverse transfer of heat along the yoke 100a to the liquid cooling pipeline 110. The fins 100aa and the liquid cooling pipeline 110 are equivalent to heat exchangers installed on the back of the stator core 100, which can replace heat exchange devices in traditional circular air-cooling systems.

In an embodiment, the liquid cooling pipeline 110 includes multiple extension parts 110a extending along the axial direction of the stator core 100, where the multiple extension parts 110a are arranged along the circumferential direction of the stator core 100, and the multiple extension parts 110a pass through the fins 100aa and the cavity side radial section 301b. The axial extension of multiple extension parts 110a can provide more contact area with the fins 100aa, more heat exchange area exposed to the cavity side radial section 301b, and can save space occupied by the liquid cooling pipeline 110, making the layout of the liquid cooling system 11 more compact.

In an embodiment, the liquid cooling pipeline 110 includes a U-shaped connection part 110b, and adjacent extension parts 110a are connected through the U-shaped connection part 110b, jointly forming a U-shaped pipe part 110c. The U-shaped pipe part 110c corresponds to a stator winding 102 in the radial direction of the stator core 100. In this way, the U-shaped pipe part 110c and some fins 100aa corresponding to the stator winding 102 can serve as heat exchangers for the stator winding 102, to exchange heat with cooling medium A. In the embodiment shown in FIG. 58, there are multiple U-shaped pipe parts 110c. The multiple U-shaped pipe parts 110c respectively correspond to multiple stator windings 102, thereby forming multiple heat exchangers respectively corresponding to stator windings 102 on the back of stator core 100, making the heat exchange effect more uniform.

In an embodiment, the lamination stack 200 is provided with the fins 100aa. The lamination stack 200 includes multiple laminated plates 201. A part of the yoke parts 201a of the laminated plates 201 are spaced from each other in the axial direction of the stator core 100, to form the fins 100aa. The fins 100aa are formed by yoke parts 201a of laminated plates 201 and directly contact the liquid cooling pipeline 110, enhancing the cooling effect of the yoke 100a of the stator core 100.

In an embodiment, the lamination stack 200 is provided with the cavity side radial section 301b and the ventilation gap 400. Multiple laminated plates 201 include a first laminated plate S1 and a second laminated plate S2, where the yoke part 201a of the second laminated plate S2 is arranged to form a gap on one side of the first laminated plate S1 facing the second laminated plate S2 for the connection between the ventilation gap 400 and the cavity 10a, and the gap forms the cavity side radial section 301b. The liquid cooling pipeline 110 passes through the yoke part 201a of the first laminated plate S1 along the axial direction of the stator core 100 from the gap, and the yoke part 201a of the first laminated plate S1 forms the fin 100aa. In this way, the yoke part 201a of the first laminated plate S1 is used to form the fin 100aa, and the yoke part 201a of the second laminated plate S2 is used to form the cavity side radial section 301b, which makes the formation of the fin 100aa and the cavity side radial section 301b simple.

In an embodiment, as shown in FIG. 58, along the radial direction of the stator core 100, the dimension of the yoke part 201a of the second laminated plate S2 is smaller than the dimension of the yoke part 201a of the first laminated plate S1, thus forming the gap on one side of the yoke part of the first laminated plate S1 facing the second laminated plate S2, and the gap is the cavity side radial section 301b. In this embodiment, the cavity side radial section 301b is circumferentially connected, and the cooling medium A can be fully mixed within the cavity side radial section 301b.

Furthermore, along the radial direction of the stator core 100, the liquid cooling pipeline 110 corresponds to the stator slot 100c. In this way, when the cooling medium A flows into the cavity side radial section 301b from the axial airduct 302, the cooling medium A expands from the position radially opposite to the stator slot 100c to the surroundings. Therefore, the flow rate of the cooling medium A is high at a position corresponding to the stator slot 100c in the radial direction, and relatively low at a position corresponding to the stator tooth 100b in the radial direction. Therefore, the liquid cooling pipeline 110 corresponds to the position of the stator slot 100c in the radial direction, such that the liquid cooling pipeline 110 is set at a position with a relatively high flow rate, thereby improving the heat transfer effect. In the embodiment shown in FIG. 58, each extension part 110a may correspond to a stator slot 100c.

In the embodiment shown in FIG. 58, multiple laminated plates 201 include multiple first laminated plates S1 and multiple second laminated plates S2 that are alternately arranged with each first laminated plate S1 adjacent to a second laminated plate S2, thereby forming multiple cavity side radial sections 301b. The cavity side radial sections 301b are equivalent to the gaps between the yoke parts 201a of adjacent first laminated plates S1. The denser the cavity side radial sections 301b, the more fully utilized the liquid cooling pipeline 110 can be, and the better the heat exchange effect.

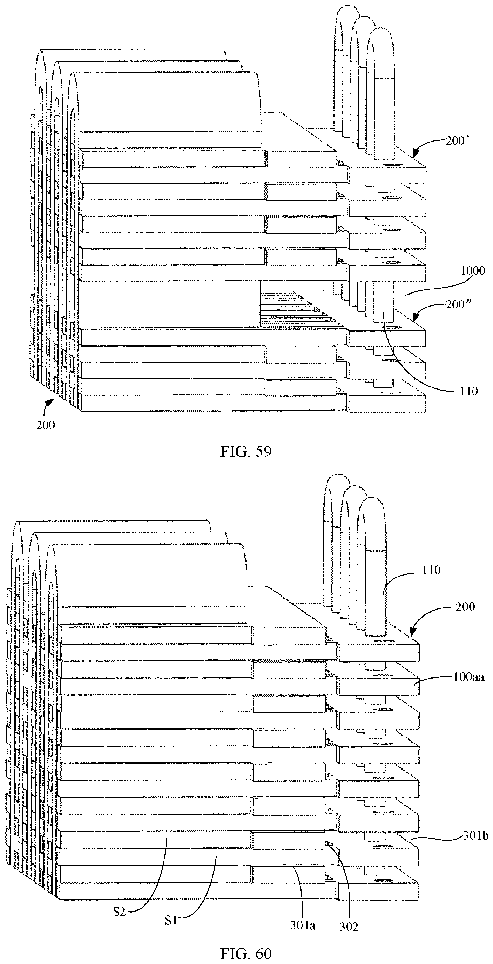

Refer to FIG. 59, which is a schematic diagram of a partial structure of a stator core 100.

In an embodiment, the stator core 100 includes a radially extended airduct 1000 and multiple lamination stacks 200. The multiple lamination stacks 200 are arranged into a cylindrical hollow structure. The multiple lamination stacks 200 include a first lamination stack 200' and a second lamination stack 200" arranged along the axial direction of the stator core 100, and an axial gap between the first lamination stack 200' and the second lamination stack 200" forms the radially extended airduct 1000. One end of the radially extended airduct 1000 is configured to directly connect the airgap 30, and the other end connects the cavity 10a at the hollow region of the stator core 100. The liquid cooling pipeline 110 passes through the radially extended airduct 1000 along the axial direction of the stator core 100. The combination of the radially extended airduct 1000 and the cooling airduct 300 further enhances the cooling effect of the air-cooling system. Moreover, the liquid cooling pipeline 110 passes through the radially extended airduct 1000 along the axial direction of the stator core 100, which enables the cooling medium A directly entering the radially extended airduct 1000 from the airgap 30 to exchange heat with the cooling liquid inside the liquid cooling pipeline 110, enabling the cooling medium A to fully exchange heat with the cooling liquid.

The liquid cooling pipeline 110 passes through the cavity side radial section 301b and radially extended airduct 1000 along the axial direction of the stator core 100, which can reduce the bending of the liquid cooling pipeline 110, make the flow of coolant in the liquid cooling pipeline 110 smoother, reduce flow resistance, and improve heat exchange rate, and is also convenient for the installation, repair, and maintenance of the liquid cooling pipeline 110.

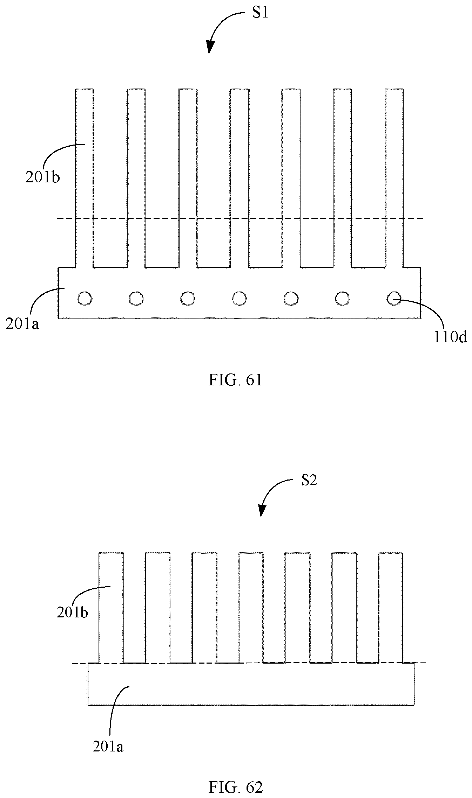

Refer to FIGs. 60 to 62. FIG. 60 is a schematic diagram of a lamination stack 200 according to an embodiment of the present disclosure. FIG. 61 is a schematic diagram of a first laminated plate S1 in the lamination stack shown in FIG. 60. FIG. 62 is a schematic diagram of a second laminated plate S2 of the lamination stack shown in FIG. 60.

The lamination stack 200 is provided with an axial airduct 302, a winding side radial section 301a, and a cavity side radial section 301b. The winding side radial section 301a connects the ventilation gap 400 and the axial airduct 302, and the cavity side radial section 301b connects the axial airduct 302 and the cavity 10a.

In the embodiments shown in FIGs. 61 and 62, the dimension of the yoke part 201a of the second laminated plate S2 along the radial direction of the stator core 100 is smaller than the dimension of the yoke part 201a of the first laminated plate S1 in this direction, so that a side of the yoke part 201a of the first laminated plate S1 facing the second laminated plate S2 forms the cavity side radial section 301b. The formation of the winding side radial section 301a and axial airduct 302 can be referred to in the previous description, which is not repeated here.

The lamination stack 200 is provided with a liquid cooling pipeline 110. The liquid cooling pipeline 110 passes through the yoke part 201a of the first laminated plate S1 and the cavity side radial section 301b. The yoke part 201a of the first laminated plate S1 forms a heat exchange fin of the liquid cooling pipeline 110, and the liquid cooling pipeline 110 and the fin 100aa jointly serve as the heat exchanger of the lamination stack 200.

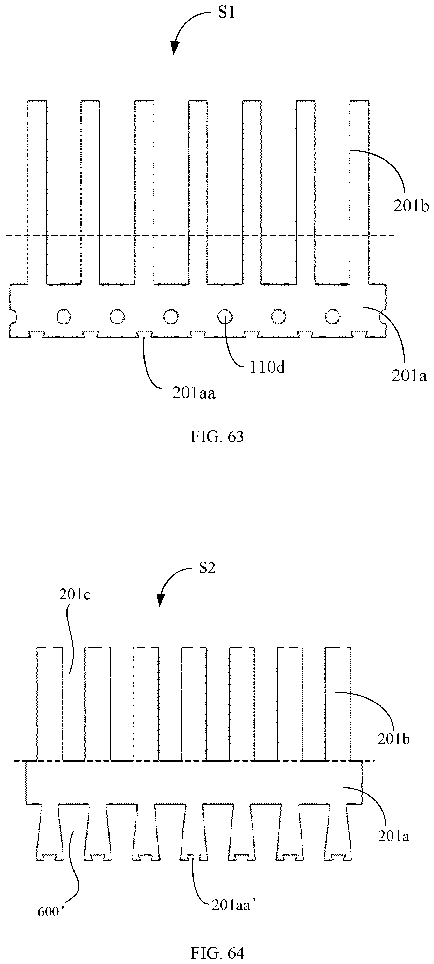

Refer to FIGs. 63 and 64. FIG. 63 is a schematic diagram of the first laminated plate S1 shown in FIG. 60. FIG. 64 is a schematic diagram of the second laminated plate S2 shown in FIG. 60.

In an embodiment, along the radial direction of the stator core 100, the dimension of the yoke part 201a of the second laminated plate S2 is equal to the dimension of the yoke part 201a of the first laminated plate S2. The yoke part 201a of the second laminated plate 201a is provided with a cavity connection notch 600'. One end of the cavity connection notch 600' connects the axial airduct 302, and the other end connects the cavity 10a. A channel of the cavity connection notch 600' connecting the axial airduct 302 and the cavity 10a forms the gap, and the gap is the cavity side radial section 301b. There can be multiple cavity connection notches 600' arranged along the circumferential direction of the stator core 100 to form multiple cavity side radial sections 301b.

In the embodiments shown in FIGs. 61 and 63, the yoke part 201a of the first laminated plate S1 is provided with a pipeline hole 110d through which the liquid cooling pipeline 110 passes. The liquid cooling pipeline 110 passes the yoke part 201a of the first laminated plate S1 through the pipeline hole 110d, and passes the cavity side radial section 301b and the radially extended airduct 1000. The position of the cavity connection notch 600' shown in FIG. 64 is the cavity side radial section 301b. In this embodiment, the extension part 100a of the liquid cooling pipeline 110 is facing the slot 201c.

The lamination stack 200 may include a radial tensing component to achieve the fixation of the lamination stack 200 along the radial direction of the stator core 100. In the embodiments shown in FIGs. 63 and 64, the yoke part 201a of the first laminated plate S1 includes a first positioning slot 201aa, and the yoke part 201a of the second laminated plate S2 includes a second positioning slot 201aa'. The first positioning slot 201aa corresponds to the second positioning slot 201aa' along the stacking direction, forming an axially penetrating positioning slot 700 (refer to FIG. 13). The radial tensing component may include a positioning support (not shown in the drawings). The positioning support is at least partially assembled in the positioning slot 700 to radially position the multiple laminated plates 201. The shape of the positioning slot 700 is not limited. In this embodiment, the positioning slot 700 adopts a dovetail structure, and correspondingly, the positioning support can be with a dovetail structure, which is not limited.

In some embodiments described above, only the case where a lamination stack 200 includes two specifications of laminated plates 201, the first laminated plate S1 and the second laminated plate S2, is described. However, it should be noted that the lamination stack 200 is not limited to including two specifications of laminated plates 201, but can further include more or fewer specifications of laminated plates 201. However, in the manufacturing process of the stator core 100, the more specifications of laminated plates 201, the more likely it is to cause confusion. Therefore, it is preferable to include at most two specifications of laminated plates 201 in a lamination stack 200.

In some embodiments described above, each laminated plate 201 in the lamination stack 200 can use a silicon steel sheet with a thickness of 0.2mm~0.7mm, and further use a silicon steel sheet with a thickness of 0.65mm. There is no limit to the number of laminated plates 201 in the lamination stack 200. The lamination stack 200 can be pre-assembled using riveting, bonding, or other methods to reduce the risk of stacking wrongly. In addition, in order to prevent that a sharp corner of a tooth part 201b of a laminated plate 201 scratches the stator winding 102, chamfering can further be performed on the sharp corners of the tooth parts 201b, as shown in FIG. 29.

In some embodiments described above, the thickness of each laminated plate 201 in the lamination stack 200 may be different and can be determined according to the actual situation. In addition, the heights and widths of the cooling airduct 300 and the ventilation gap 400 should not be too small. For example, the height and width dimensions can be greater than 3mm. For example, the height and width dimensions with 4mm-6mm are more suitable. On the one hand, it can reduce the flow resistance of cooling medium A, and on the other hand, it is necessary to consider the situation where the height and width dimensions of cooling airduct 300 are too small, which may cause blockage of cooling airduct 300 during vacuum impregnation. The heights and widths of the cooling airduct 300 and the ventilation gap 400 should not be too large. On the one hand, it will reduce a ratio of a heat dissipation area to a flow area, which will lead to a decrease in cooling effect for the cooling medium A with a fixed volume flow rate. On the other hand, if the width of ventilation gap 400 is too large, the width of the tooth part 201b will be narrowed, and electromagnetic performance such as electromagnetic torque will be lost, and the loss will increase in a manner greater than a linear relationship.

In some embodiments described above, the first laminated plate S 1 and/or the second laminated plate S2 are not limited to one laminated plate, but can also be a pre-assembled lamination stack formed by pre-stacking multiple laminated plates.

The foregoing are only some preferred embodiments of the present disclosure and are not intended to limit the present disclosure, and any modifications, equivalent substitutions, improvements, etc., made within the spirit and principles of the present disclosure shall be included within the scope of protection of the present disclosure.

## Claims

1. A generator stator, comprising:
a stator core with a cylindrical hollow structure, wherein the stator core comprises a cavity in a hollow region and comprises a plurality of stator teeth on a side of the stator core facing a generator rotor, the plurality of the stator teeth extend radially along the stator core and are arranged at intervals along a circumferential direction of the stator core, a gap between adjacent two stator teeth forms a stator slot such that a plurality of the stator slots are formed, and the stator core comprises a cooling airduct; and
a plurality of stator windings in the stator slots, wherein a ventilation gap is formed between the stator winding and at least one stator tooth adjacent to the stator winding in a tooth width direction, the ventilation gap extends along an extension direction of the stator tooth, the cooling airduct connects the ventilation gap and the cavity in the hollow region of the stator core, and the ventilation gap is configured to connect an airgap between the generator stator and the generator rotor.

2. The generator stator according to claim 1, wherein a plurality of the ventilation gaps are formed between the stator winding and at least one stator tooth adjacent to the stator winding in the tooth width direction, and at least a part of the plurality of the ventilation gaps are arranged along an axial direction of the stator core.

3. The generator stator according to claim 1, wherein a plurality of the ventilation gaps are formed between the stator winding and a stator tooth adjacent to the stator winding in the tooth width direction; and a plurality of the ventilation gaps are formed between the stator winding and a plurality of stator teeth adjacent to the stator winding in the tooth width direction.

4. The generator stator according to claim 1, wherein the stator core comprises: a plurality of lamination stacks arranged in a cylindrical hollow structure, and the lamination stack comprises a plurality of laminated plates stacked in a thickness direction, wherein a stacking direction of the plurality of the laminated plates is parallel to an axial direction of the stator core, the laminated plate comprises a tooth part, the tooth parts of the plurality of the laminated plates are stacked to form the stator tooth, and the plurality of the laminated plates comprise a first laminated plate and a second laminated plate, wherein in the stacking direction, a tooth part of the first laminated plate and a tooth part of the second laminated plate do not completely overlap in the tooth width direction to form the ventilation gap.

5. The generator stator according to claim 4, wherein the tooth part of the first laminated plate and the tooth part of the second laminated plate are staggered in the tooth width direction, and in an orthographic projection along the stacking direction, a projection region of the tooth part of the first laminated plate and a projection region of the tooth part of the second laminated plate are staggered in the tooth width direction.

6. The generator stator according to claim 4, wherein a width of the tooth part of the first laminated plate is larger than a width of the tooth part of the second laminated plate, and in an orthographic projection along the stacking direction, a projection region of the tooth part of the second laminated plate is located in a projection region of the tooth part of the first laminated plate, and the tooth part of the second laminated plate is staggered with the tooth part of the first laminated plate on at least one side in the tooth width direction.

7. The generator stator according to claim 6, wherein
the tooth part of the first laminated plate is aligned with the tooth part of the second laminated plate at one side in the tooth width direction; or
the tooth part of the first laminated plate is aligned with the tooth part of the second laminated plate along a width-wise centerline of the tooth.

8. The generator stator according to claim 1, wherein the cooling airduct comprises a radial airduct extending radially along the stator core and an axial airduct extending axially along the stator core, wherein the radial airduct is connected to the axial airduct, and is connected to the ventilation gap and the cavity at the hollow region of the stator core.

9. The generator stator according to claim 8, wherein the stator core comprises a plurality of lamination stacks arranged in a cylindrical hollow structure, the stator core comprises a yoke, and the stator tooth is on a side of the yoke facing the generator rotor, the lamination stack comprises a plurality of laminated plates stacked along a thickness direction and is provided with the cooling airduct, wherein a stacking direction of the plurality of the laminated plates is parallel to an axial direction of the stator core, the laminated plate comprises a tooth part and a yoke part connected to the tooth part, and the tooth parts of the plurality of the laminated plates are stacked to form the stator tooth, and the yoke parts of the plurality of the laminated plates are stacked to form the yoke, and the plurality of the laminated plates comprise a first laminated plate and a second laminated plate, wherein at least one of a yoke part of the first laminated plate or a yoke part of the second laminated plate is provided with a notch that penetrates through along a thickness direction to form the axial airduct.

10. The generator stator according to claim 9, wherein a dimension of the yoke part of the second laminated plate in a radial direction of the stator core is smaller than a dimension of the yoke part of the first laminated plate in the radial direction, the yoke part of the first laminated plate is provided with the notch, and in an orthographic projection along the stacking direction, a projection region of the notch is located outside a projection region of the yoke part of the second laminated plate, wherein the notch forms the axial airduct; or
a dimension of the yoke part of the second laminated plate in a radial direction of the stator core is equal to a dimension of the yoke part of the first laminated plate in the radial direction, and the notch comprises a first notch and a second notch, wherein the yoke part of the first laminated plate is provided with the first notch, and the yoke part of the second laminated plate is provided with the second notch, and in the stacking direction, the first notch and the second notch partially overlap, and overlapping parts forms the axial airduct.

11. The generator stator according to claim 9 or 10, wherein the axial airduct passes through the lamination stack along the axial direction of the stator core; and/or
a plurality of the axial airducts are provided and distributed along the circumferential direction of the stator core.

12. The generator stator according to claim 9, wherein the radial airduct comprises a winding side radial section and a cavity side radial section distributed radially on two sides of the axial airduct, wherein the winding side radial section connects the ventilation gap and the axial airduct, and the cavity side radial section connects the axial airduct and the cavity at the hollow region of the stator core.

13. The generator stator according to claim 12, wherein the laminated plate comprises a plurality of the tooth parts that are arranged along the circumferential direction of the stator core, wherein a gap between two adjacent tooth parts forms a slot part such that the slot parts are stacked to form the stator slot, and the yoke part of the first laminated plate is provided with the notch and a connection part in the slot part penetrating through along the thickness direction, wherein the connection part in the slot part connects the slot part of the first laminated plate and the notch, and the connection part in the slot part forms the winding side radial section on a side of the yoke part of the second laminated plate.

14. The generator stator according to claim 13, wherein the notch and the connection part in the slot part are provided on at least one side of the tooth part in the tooth width direction, and dimensions of the notch and the connection part in the slot part in the tooth width direction are smaller than a dimension of the slot part in the tooth width direction; or
the yoke part forms a hole penetrating through along a slot width direction at the notch and the connection part in the slot part.

15. The generator stator according to claim 13, wherein a flow area of the winding side radial section is greater than a flow area of the ventilation gap, and the lamination stack comprises a protruding structure protruding from an inner wall of the winding side radial section towards the winding side radial section, wherein a protruding direction of the protruding structure is different from an extension direction of the winding side radial section.

16. The generator stator according to claim 12, wherein
a dimension of the yoke part of the second laminated plate along the radial direction of the stator core is smaller than a dimension of the yoke part of the first laminated plate in the radial direction of the stator core, and the yoke part of the second laminated plate is configured such that a side of the yoke part of the first laminated plate facing the second laminated plate forms a gap, and the gap connects the axial airduct and the cavity, and a channel of the gap connecting the axial airduct and the cavity forms the cavity side radial section; or
a dimension of the yoke part of the second laminated plate along the radial direction of the stator core is equal to a dimension of the yoke part of the first laminated plate in the radial direction of the stator core, and the yoke part of one of the first laminated plate and the second laminated plate is provided with a cavity connection notch penetrating through along the thickness direction, wherein the cavity connection notch connects the axial airduct and the cavity, and a channel of the cavity connection notch connecting the axial airduct and the cavity forms the cavity side radial section.

17. The generator stator according to claim 1, wherein the stator core comprises a plurality of lamination stacks arranged in a cylindrical hollow structure, and the lamination stack comprises a plurality of laminated plates stacked along a thickness direction and a fixing component, wherein a stacking direction of the plurality of the laminated plates is parallel to the axial direction of the stator core, and the fixing component compresses the plurality of the laminated plates along the stacking direction.

18. The generator stator according to claim 17, wherein the stator core comprises a yoke, wherein the stator tooth is on a side of the yoke facing the generator rotor, a laminated plate comprises a tooth part and a yoke part connected to the tooth part, the tooth parts of the plurality of the laminated plates are stacked to form the stator tooth, and the yoke parts of the plurality of the laminated plates are stacked to form the yoke, wherein the yoke parts of the plurality of the laminated plates are provided with connection holes that are coaxially arranged, and the fixing component comprises a connecting component, wherein the connecting component is assembled with the connection hole to compress the plurality of laminated plates along the stacking direction.

19. The generator stator according to claim 18, wherein at least a part of the yoke parts of the plurality of the laminated plates comprise a widening part, wherein the widening part is arranged on at least one side of the connection holes in the tooth width direction.

20. The generator stator according to claim 1, wherein
the stator core comprises a plurality of lamination stacks arranged in a cylindrical hollow structure, wherein the lamination stack comprises a radial tensing component, and a plurality of laminated plates are positioned in the radial direction of the stator core by a radial tensioning force applied by the radial tensing component; and/or
the stator core comprises a yoke, wherein a stator tooth is on a side of the yoke facing the generator rotor, and the stator core comprises a plurality of lamination stacks arranged in a cylindrical hollow structure, wherein the lamination stack comprises a support structure and a plurality of laminated plates stacked along the thickness direction, wherein the laminated plate comprises a tooth part and a yoke part connected to the tooth part, the tooth parts of the plurality of the laminated plates are stacked to form the stator tooth, and the yoke parts of the plurality of the laminated plates are stacked to form the yoke, and the plurality of the laminated plates comprise a first laminated plate and a second laminated plate, wherein a dimension of the first laminated plate along the radial direction of the stator core is greater than a dimension of the second laminated plate in this direction, and the support structure supports the yoke part of the first laminated plate along the axial direction of the stator core; and/or
the stator core comprises a plurality of lamination stacks and a radially extended airduct, wherein the plurality of the lamination stacks comprise a first lamination stack and a second lamination stack arranged along the axial direction of the stator core, and an axial gap between the first lamination stack and the second lamination stack forms the radially extended airduct, wherein one end of the radially extended airduct is configured to directly connect the airgap, and the other end of the radially extended airduct connects the cavity.

21. A generator, comprising:
the generator stator according to any one of claims 1 to 20; and
a generator rotor, wherein the generator rotor is coaxial with the generator stator and is rotatable relative to the generator stator, wherein an airgap is between the generator rotor and the generator stator, and the ventilation gap connects the airgap and the cooling airduct.
